# EUROPEAN PATENT SPECIFICATION

(11) **EP 3 836 553 B1**
(45) Date of publication and mention of the grant of the patent: **15.05.2024**
(21) Application number: 19846331.7
(22) Date of filing: 18.06.2019
(51) Int. Cl.: H04N 21/2381, H04N 21/438, H04N 21/235, H04N 21/431, H04N 21/643, H04N 21/443, H04H 60/82, H04N 21/236, H04N 21/2362, H04N 21/43, H04N 21/434, H04N 21/462, H04N 21/482

(54) **BROADCAST SIGNAL TRANSMISSION METHOD, BROADCAST SIGNAL TRANSMISSION APPARATUS, BROADCAST SIGNAL RECEPTION METHOD, AND BROADCAST SIGNAL RECEPTION APPARATUS**
RUNDFUNKSIGNALÜBERTRAGUNGSVERFAHREN, RUNDFUNKSIGNALÜBERTRAGUNGSVORRICHTUNG, RUNDFUNKSIGNALEMPFANGSVERFAHREN UND RUNDFUNKSIGNALEMPFANGSVORRICHTUNG
PROCÉDÉ DE TRANSMISSION DE SIGNAL DE DIFFUSION, APPAREIL DE TRANSMISSION DE SIGNAL DE DIFFUSION, PROCÉDÉ DE RÉCEPTION DE SIGNAL DE DIFFUSION ET APPAREIL DE RÉCEPTION DE SIGNAL DE DIFFUSION

(30) Priority: 09.08.2018 KR 20180092824; 27.08.2018 KR 20180100317
(43) Date of publication of application: 16.06.2021
(73) Proprietor: LG Electronics Inc., Yeongdeungpo-gu Seoul 07336 (KR)
(72) Inventor: PARK, Jonghwan, Seoul 06772 (KR); KWAK, Minsung, Seoul 06772 (KR); YOON, Joonhee, Seoul 06772 (KR)
(74) Representative: Frenkel, Matthias Alexander
(86) International application number: PCT/KR2019/007312
(87) International publication number: WO 2020/032377

(56) References cited:
- KR-A- 20120 081 494
- KR-A- 20120 081 494
- KR-A- 20140 090 278
- US-A1- 2008 141 317
- US-A1- 2011 007 218
- US-A1- 2011 321 094
- US-A1- 2011 321 094
- US-A1- 2015 033 271
- US-A1- 2017 006 316
- "Digital Video Broadcasting (DVB); Transport of MPEG-2 TS Based DVB Services over IP Based Networks", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V2.1.1, 1 April 2016 (2016-04-01), XP014274063,
- Anonymous: "Digital Video Broadcasting (DVB); Specification for Service Information (SI) in DVB systems", ETSI EN 300 468 V1.15.1, 1 March 2016 (2016-03-01), XP055789445, Retrieved from the Internet: URL:https://www.etsi.org/deliver/etsi_en/3 00400_300499/300468/01.15.01_60/en_300468v 011501p.pdf [retrieved on 2021-03-24]

## Description

### TECHNICAL FIELD

The present disclosure relates to a broadcast signal transmission apparatus, a broadcast signal transmission method, a broadcast signal reception method, and a broadcast signal reception apparatus.

### BACKGROUND ART

As analog broadcast signal transmission comes to an end, various technologies for transmitting/receiving digital broadcast signals are being developed. A digital broadcast signal may include a larger amount of video/audio data than an analog broadcast signal and further include various types of additional data in addition to the video/audio data.

Document US 2011 / 0 321 094 A1 may be construed to disclose a technique where an EPG presented on an IPTV lists broadcast TV programming but when an entry on the EPG is selected, an Internet server, and not the TV broadcast source, is accessed and streams the listed programming to the IPTV.

Document US 2017 / 0 006 316 A1 may be construed to disclose an apparatus for transmitting and receiving a signal and a method for transmitting and receiving a signal. There is a method for transmitting a signal, comprising the steps of: encoding video service data, the video service data comprising UHD video service data; generating signaling information, the signaling information comprising service description information describing a service, the service description information comprising a first descriptor including service type information which determines a service type, wherein if the service type has a first coding value, the first coding value indicates that the service is a HEVC digital television service, the service information comprising information about an event related to the service, the event information or the service description information comprising a second descriptor, the second descriptor information comprising video characteristic information of the UHD video service data, the video characteristic information comprising video codec information and frame rate information of the UHD video service data; multiplexing the signaling information and the UHD video data to a transport stream; channel coding the transport stream; and modulating the transport stream and transmitting the modulated stream.

Document ETSI TS 1 02 034 V2.1.1 may be construed to disclose extensions to the set of standardized specifications published by DVB for deployments of DVB services over bi-directional IP networks. The document defines the mechanisms required in order for a consumer to be able to buy a standard DVB Home Network End Device (HNED), take it home, plug it into an IP network, choose and consume DVB services available over the IP network. The interface to the HNED defined as IPI-1 represents the end-terminal interface for a DVB-IPTV service. Moreover, there are specifications to be supported on the interface to the HNED defined as IPI-1 and supports both IP version 4 and IP version 6.

Document US 2015 / 0 033 271 A1 may be construed to disclose a method for receiving a broadcast service comprises the following steps: receiving service signaling data corresponding to a non-real-time service object; determining a consumption model for the non-real-time service object based on the service signaling data; if the consumption model of the non-real-time service object is determined as a trigger declarative object, receiving and storing the non-real-time service object according to a pre-set method; receiving a first packetized stream; extracting a trigger including a trigger action and a trigger time from a payload of the first packetized stream; and performing the trigger action for said stored non-real-time service object at the time designated by said trigger time.

Document ETSI EN 300 468 V 1.1 5.1 may be construed to disclose the Service Information (SI) data which forms a part of DVB bitstreams, in order that the user can be provided with information to assist in selection of services and/or events within the bitstream, and so that the Integrated Receiver Decoder (IRD) can automatically configure itself for the selected service. SI data for automatic configuration is mostly specified within ISO/IEC 13818-1 as Program Specific Information (PSI). The document specifies additional data which complements the PSI by providing data to aid automatic tuning of IRDs, and additional information intended for display to the user. The manner of presentation of the information is not specified in the document, and IRD manufacturers have freedom to choose appropriate presentation methods.

### DISCLOSURE

### Technical Problems

A broadcast signal transmission apparatus and a broadcast signal reception apparatus according to embodiments of the present disclosure implement an Internet protocol (IP) based TV service capable of providing the same user experience (UX) as a terrestrial, satellite, and/or cable linear channel.

The broadcast signal transmission apparatus and the broadcast signal reception apparatus according to embodiments of the present disclosure provide a channel guide integrated with the terrestrial, satellite, and/or cable channel by receiving open Internet-based native code, rather than an application-based linear channel service.

The broadcast signal transmission apparatus and the broadcast signal reception apparatus according to embodiments of the present disclosure propose a service initialization method for Internet channel scanning capable of providing the same UX as a linear service channel.

The broadcast signal transmission apparatus and the broadcast signal reception apparatus according to embodiments of the present disclosure propose a signaling method for identifying an Internet stream in order to integrate a linear channel and an Internet channel.

The broadcast signal transmission apparatus and the broadcast signal reception apparatus according to embodiments of the present disclosure provide a method of enabling switching between bit streams of a digital video broadcasting (DVB) network and a DVB-Internet (DVB-I) network provided on the same dedicated channel.

### Technical Solutions

According to the present disclosure, there are provided methods and apparatuses according to the independent claims. Further developments are set forth in the dependent claims.

### Advantageous Effects

A broadcast signal transmission apparatus and a broadcast signal reception apparatus according to embodiments of the present disclosure provide super ultra-high definition (SUHD) (8k) linkage through a DVB-I channel in an standard definition (SD), high definition (HD), and/or ultra-high definition (UHD) linkage service provided on channels.

The broadcast signal transmission apparatus and the broadcast signal reception apparatus according to embodiments of the present disclosure provide a linear IP-based TV service.

The broadcast signal transmission apparatus and the broadcast signal reception apparatus according to embodiments of the present disclosure may simultaneously provide a DVB stream and a SVB-I stream on the same channel and dynamically switch between the streams.

The broadcast signal transmission apparatus and the broadcast signal reception apparatus according to embodiments of the present disclosure may provide SUHD (8k) linkage through linkage services.

The broadcast signal transmission apparatus and the broadcast signal reception apparatus according to embodiments of the present disclosure may provide a UI access service integrating a linear service and an over-the-top (OTT) service.

The broadcast signal transmission apparatus and the broadcast signal reception apparatus according to embodiments of the present disclosure may provide a DVB network and an Internet channel on the same channel by integrating the DVB network and the Internet channel and extensively use various resolutions.

### Description of Drawings

The accompanying drawings, which are included to provide a further understanding of the disclosure and are incorporated in and constitute a part of this application, illustrate embodiment(s) of the disclosure and together with the description serve to explain the principle of the disclosure.
FIG. 1 illustrates a structure of a broadcast signal transmission apparatus for future broadcast services according to an embodiment of the present disclosure.
FIG. 2 illustrates a structure of a broadcast signal reception apparatus for future broadcast services according to an embodiment of the present disclosure.
FIG. 3 illustrates a configuration of a broadcast channel.
FIG. 4 illustrates a network configuration into which DVB-I is integrated.
FIG. 5 illustrates a configuration of a broadcast signal reception apparatus according to embodiments of the present disclosure.
FIG. 6 illustrates a network information table (NIT).
FIG. 7 illustrates a bouquet association table (BAT).
FIG. 8 illustrates a service description table (SDT).
FIG. 9 illustrates a process of parsing SI by a broadcast signal reception apparatus according to embodiments of the present disclosure.
FIG. 10 illustrates a network ID.
FIG. 11 illustrates URI_linkage descriptor.
FIG. 12 illustrates uri_linkage_type according to the invention.
FIG. 13 illustrates a private data byte when uri_linkage_type is 0x61 according to the invention.
FIG. 14 illustrates a private data byte when uri_linkage_type is 0x62 according to the invention.
FIG. 15 illustrates IP_channel_ID_descriptor.
FIG. 16 illustrates a bouquet.
FIG. 17 illustrates a configuration for providing a hybrid service in one channel.
FIG. 18 illustrates a configuration of a broadcast signal reception apparatus according to embodiments of the present disclosure.
FIG. 19 illustrates a linkage descriptor.
FIG. 20 illustrates extended event linkage.
FIG. 21 illustrates private_data_byte.
FIGS. 22 and 23 illustrate a use case of an extended event linkage descriptor.
FIG. 24 illustrates private_data_byte.
FIG. 25 illustrates supplementary_video_descriptor.
FIG. 26 illustrates linkage for an alternate service.
FIGS. 27 and 28 illustrate serviceDiscoveryListTable.
FIG. 29 illustrates user interface (UI)/user experience (UX) for dynamic content switching based on linkage information.
FIG. 30 illustrates UI/UX of an ABR stream linkage service for supporting dynamic resolution.
FIG. 31 illustrates EPG UI/UX.
FIG. 32 illustrates a broadcast signal transmission method according to embodiments of the present disclosure.
FIG. 33 illustrates a broadcast signal reception method according to embodiments of the present disclosure.

### BEST MODE FOR CARRYING OUT THE DISCLOSURE

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

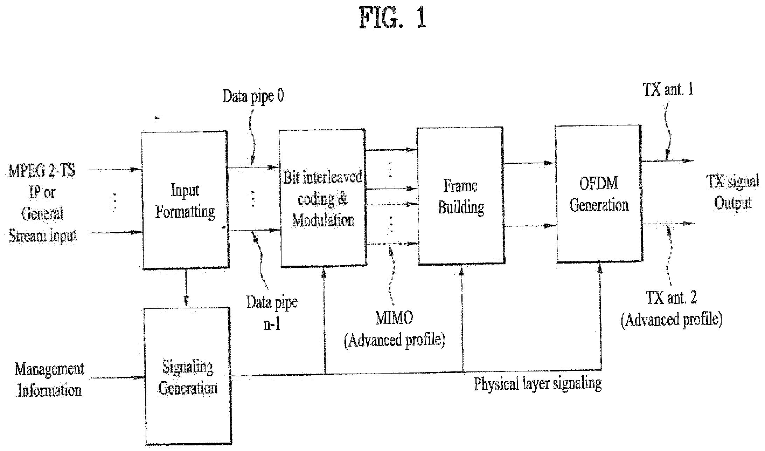

FIG. 1 illustrates a structure of a broadcast signal transmission apparatus for future broadcast services according to an embodiment of the present disclosure.

The broadcast signal transmission apparatus for future broadcast services according to an embodiment of the present disclosure may include an input formatting block 1000, a BICM (Bit interleaved coding & modulation) block 1010, a frame building block 1020, an OFDM (Orthogonal Frequency Division Multiplexing) generation block 1030 and a signaling generation block 1040. A description will be given of the operation of each module of the broadcast signal transmission apparatus.

IP stream/packets and MPEG2-TS are the main input formats, other stream types are handled as general streams. In addition to these data inputs, Management Information is input to control the scheduling and allocation of the corresponding bandwidth for each input stream. One or multiple TS stream(s), IP stream(s) and/or General Stream(s) inputs are simultaneously allowed.

The input formatting block 1000 may demultiplex each input stream into one or multiple data pipe(s), to each of which an independent coding and modulation is applied. The data pipe (DP) is the basic unit for robustness control, thereby affecting quality-of-service (QoS). One or multiple service(s) or service component(s) may be carried by a single DP. Details of operations of the input formatting block 1000 will be described later.

The data pipe is a logical channel in the physical layer that carries service data or related metadata, which may carry one or multiple service(s) or service component(s).

Also, the data pipe unit: a basic unit for allocating data cells to a DP in a frame.

In the BICM block 1010, parity data is added for error correction and the encoded bit streams are mapped to complex-value constellation symbols. The symbols are interleaved across a specific interleaving depth that is used for the corresponding DP. For the advanced profile, MIMO encoding is performed in the BICM block 1010 and the additional data path is added at the output for MIMO transmission. Details of operations of the BICM block 1010 will be described later.

The Frame Building block 1020 may map the data cells of the input DPs into the OFDM symbols within a frame. After mapping, the frequency interleaving is used for frequency-domain diversity, especially to combat frequency-selective fading channels. Details of operations of the Frame Building block 1020 will be described later.

After inserting a preamble at the beginning of each frame, the OFDM Generation block 1030 may apply conventional OFDM modulation having a cyclic prefix as guard interval. For antenna space diversity, a distributed MISO scheme is applied across the transmitters. In addition, a Peak-to-Average Power Reduction (PAPR) scheme is performed in the time domain. For flexible network planning, this proposal provides a set of various FFT sizes, guard interval lengths and corresponding pilot patterns. Details of operations of the OFDM Generation block 1030 will be described later.

The Signaling Generation block 1040 may create physical layer signaling information used for the operation of each functional block. This signaling information is also transmitted so that the services of interest are properly recovered at the receiver side. Details of operations of the Signaling Generation block 1040 will be described later.

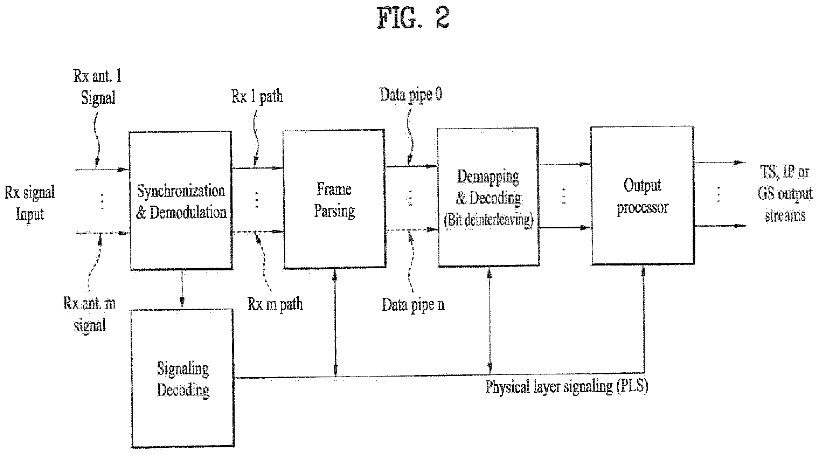

FIG. 2 illustrates a structure of a broadcast signal reception apparatus for future broadcast services according to an embodiment of the present disclosure.

The broadcast signal reception apparatus for future broadcast services according to an embodiment of the present disclosure may correspond to the broadcast signal transmission apparatus for future broadcast services, described with reference to FIG. 1.

The broadcast signal reception apparatus for future broadcast services according to an embodiment of the present disclosure may include a synchronization & demodulation module 9000, a frame parsing module 9010, a demapping & decoding module 9020, an output processor 9030 and a signaling decoding module 9040. A description will be given of operation of each module of the broadcast signal reception apparatus.

The synchronization & demodulation module 9000 may receive input signals through m Rx antennas, perform signal detection and synchronization with respect to a system corresponding to the broadcast signal reception apparatus and carry out demodulation corresponding to a reverse procedure of the procedure performed by the broadcast signal transmission apparatus.

The frame parsing module 9010 may parse input signal frames and extract data through which a service selected by a user is transmitted. If the broadcast signal transmission apparatus performs interleaving, the frame parsing module 9010 may carry out deinterleaving corresponding to a reverse procedure of interleaving. In this case, the positions of a signal and data that need to be extracted may be obtained by decoding data output from the signaling decoding module 9040 to restore scheduling information generated by the broadcast signal transmission apparatus.

The demapping & decoding module 9020 may convert the input signals into bit domain data and then deinterleave the same as necessary. The demapping & decoding module 9020 may perform demapping for mapping applied for transmission efficiency and correct an error generated on a transmission channel through decoding. In this case, the demapping & decoding module 9020 may obtain transmission parameters necessary for demapping and decoding by decoding the data output from the signaling decoding module 9040.

The output processor 9030 may perform reverse procedures of various compression/signal processing procedures which are applied by the broadcast signal transmission apparatus to improve transmission efficiency. In this case, the output processor 9030 may acquire necessary control information from data output from the signaling decoding module 9040. The output of the output processor 8300 corresponds to a signal input to the broadcast signal transmission apparatus and may be MPEG-TSs, IP streams (v4 or v6) and generic streams.

The signaling decoding module 9040 may obtain PLS information from the signal demodulated by the synchronization & demodulation module 9000. As described above, the frame parsing module 9010, demapping & decoding module 9020 and output processor 9030 may execute functions thereof using the data output from the signaling decoding module 9040.

A broadcast signal transmission apparatus and a broadcast signal reception apparatus according to embodiments of the present disclosure provide an IP-based TV service that provides the same user experience (UX) as UX for a linear channel such as a terrestrial, satellite, and/or cable channel.

The broadcast signal transmission apparatus and the broadcast signal reception apparatus according to embodiments of the present disclosure provide a channel guide by receiving open Internet-based native code, rather than an application-based linear channel service. The channel guide means a channel guide integrated with a terrestrial channel, a satellite channel, a cable channel, or a network.

The broadcast signal transmission apparatus and the broadcast signal reception apparatus according to embodiments of the present disclosure propose an MPEG-2 system/DVB service information (SI) based service initialization method for Internet channel scanning capable of providing the same user experience (UX) as a linear service channel.

The broadcast signal transmission apparatus and the broadcast signal reception apparatus according to embodiments of the present disclosure propose a method of uniquely signaling a network, a stream, or a service for identifying an Internet stream in order to provide an integrated channel guide including a linear channel and an Internet channel.

The broadcast signal transmission apparatus and the broadcast signal reception apparatus according to embodiments of the present disclosure extensively propose a method of replacing transport stream (TS) identification (ID) information included in DVB SI.

The broadcast signal transmission apparatus and the broadcast signal reception apparatus according to embodiments of the present disclosure propose a method of enabling switching between bit streams provided by a DVB network and a DVB-I channel provided on the same dedicated channel.

The broadcast signal transmission apparatus and the broadcast signal reception apparatus according to embodiments of the present disclosure may provide SUHD (8k) linkage through a DVB-I channel based on an SD, HD, and/or UHD linkage service provided through channels.

The broadcast signal transmission apparatus and the broadcast signal reception apparatus according to embodiments of the present disclosure provide a linear IP-based TV service and use a service bootstrap method of a linear channel network in order to provide such a service.

In this specification, unique information for identifying a linear IP-based TV service is defined. An IP-based TV channel may be added to a linear channel electronic program guide (EPG). The broadcast signal reception apparatus according to embodiments of the present disclosure may provide the linear channel EPG including the IP-based channel to users. The broadcast signal transmission apparatus and the broadcast signal reception apparatus according to embodiments of the present disclosure simultaneously provide a DVB stream and a DVB-I stream on the same dedicated channel and dynamically switch between the streams during a predetermined period. Additionally, information for an SUHD (8k) linkage service is extensively defined in a linkage service provided in the DVB standard.

The broadcast signal transmission apparatus and the broadcast signal reception apparatus according to embodiments of the present disclosure use a service bootstrap method of a linear channel network in order to provide a linear IP-based TV service. Linkage between a DVB network and a DVB-I network is defined based on DVB SI at a bouquet level, a service level, and/or an event level. Content of various resolutions on a logical channel may be provided to users through linkage information between the DVB network and the DVB-I network.

The broadcast signal transmission apparatus and the broadcast signal reception apparatus according to embodiments of the present disclosure may access services through a user interface (UI) into which a linear service and an over-the-top (OTT) service are integrated in an apparatus supporting a radio frequency (RF) based DVB tuner. In addition, a media service that provides the same user experience (UX) as linear channels is implemented through open Internet without a set-top box (STB). Resolution types that may be provided on the same channel are extended by integrating the DVB network and the Internet channel.

A traditional IP-based linear channel service has a form of performing authentication through subscription to a specific operator (e.g., Internet service provider (ISP) or network operator) and receiving the IP linear service through an STB provided by the operator. In addition, with the advent of a connectivity TV, the IP linear service in an STB-less form may also be provided. Representative standard technology includes ATSC 3.0, integrated broadcast and broadband (IBB), and hybrid broadcast broadband TV (HbbTV). A client may receive various linear rich-media services according to an application on an operating system (OS) platform inside the TV. Various operators provide service applications developed thereby to be installed on a TV platform and provide application programming interfaces (APIs) that enable the applications to perform service request/reception with respect to a server for receiving data for services. Based on a life cycle of the APIs, the client may access the applications through a TV UI and receive various services through the applications.

Like a linear TV, preference of OTT channels is increasing all around the world including North America and Europe. With expansion of the OTT market, a media application of an IP-based device is essential. However, an influential OTT form is becoming exclusive due to an independent platform and a unique service ecosystem thereof. In other words, a standalone application ecosystem such as a codec, a protocol stack, an application, and/or a browser, provided only by each OTT service, is being consumed.

The broadcast signal transmission apparatus and the broadcast signal reception apparatus according to embodiments of the present disclosure propose a method for solving issues such as an exclusive platform of OTT services and dependency on application operation. In addition, service discovery may be performed at a receiver native level, rather than providing channel UX similar to a terrestrial, satellite, and/or cable linear channel service by necessarily executing an application, and a client may access an accessible service server to receive a linear service. Furthermore, standalone OTT platforms may be integrated into one unified TV native platform so that a service effect capable of receiving OTT content on a channel without executing an OTT application is provided to a user.

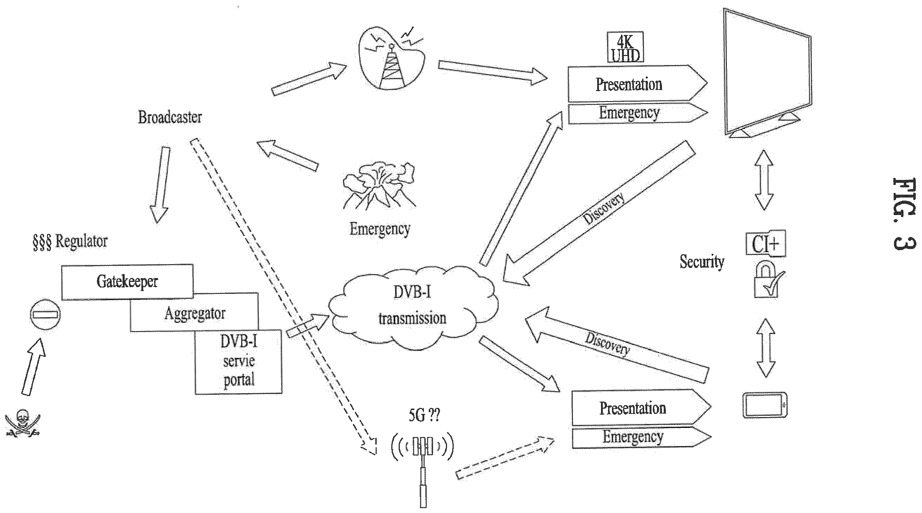

FIG. 3 illustrates a configuration of a broadcast channel.

A broadcaster may transmit services over a terrestrial, satellite, and/or cable channel and, at the same time, an Internet channel. A service provider, and a device manufacturer capable of receiving a DVB-I service may obtain authentication of service channels through regulation and provide the Internet channel through a linear service and a channel aggregator. In order to indicate a linear broadcast channel list and the Internet channel in an aggregated form, bootstrapping may be performed through service discovery information provided by a linear network. In terms of the broadcaster, a form of providing a traditional service may be extended and additional services may be provided in the form of an on-demand/multicast service along with a traditional linear channel network. In addition, a personalization service may be provided through a linkage-based usage report of the Internet channel. From the viewpoint of a TV/STB manufacturer, a channel list in which an OTT service is aggregated with a traditional terrestrial/satellite/cable (T/S/C) channel may be provided, thereby creating an opportunity to provide various services and expand functions of a terminal. A network/ISP leads to expansion in providing services by aggregating OTT content through network infrastructure. In addition, through dynamic unicast/multicast allocation, the network/ISP provides more enhanced delivery performance than a terminal that provides services based on a non-management network.

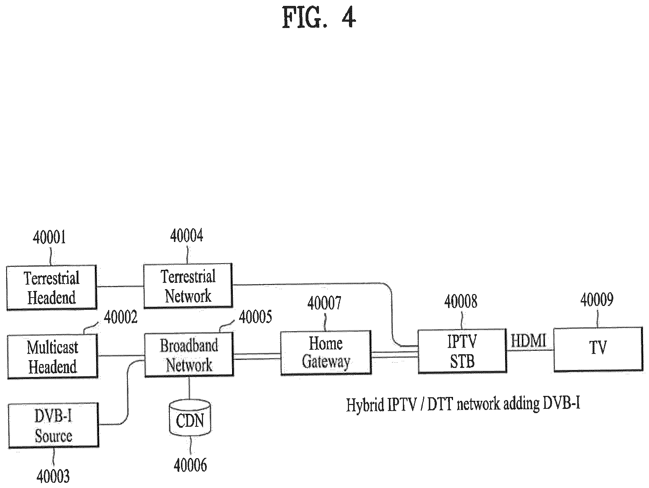

FIG. 4 illustrates a network configuration into which DVB-I is integrated.

In a broadcast transmission apparatus according to embodiments of the present disclosure, OTT may provide an industry standard based ecosystem without the need to separately provide an OTT application suitable for an OS environment which is different according to each existing terminal. This may lead to the expansion of service access by providing a common service interface.

A broadcast signal reception apparatus may correspond to a terminal (TV) 40009. A detailed configuration of the TV 40009 has been described above with reference to FIG. 2.

An STB 40008 may be connected to the broadcast signal reception apparatus. For example, the STB 40008 may be connected to the broadcast signal reception apparatus based on an high definition multimedia interface (HDMI) scheme.

A gateway 40007 receives content or services from a broadband network 40005 to provide the content or services to the STB 40008.

The broadband network 40005 provides content or services related thereto to the broadcast signal reception apparatus.

A content delivery network (CDN) 40006 provides data related to content to the broadband network 40005.

A multicast headend 40002 delivers data to the broadband network 40005 based on a multicast scheme.

A source (DVB-I source) 40003 provides data to the broadband network 40005. The data provided by the source may include data according to a DVB-I scheme.

A terrestrial network 40004 receives terrestrial related data from a terrestrial headend 40001 based on a terrestrial channel and provides the data to the STB 40008.

The broadcast signal reception apparatus according to embodiments of the present disclosure may perform service discovery through a method described below and the broadcast signal transmission apparatus provides a method for such service discovery.

A standalone linear IP service provides an integrated service guide of a traditional terrestrial/satellite/cable (T/S/C) channel and an IP channel. For service scanning of the IP channel, service bootstrap information is received using the following method.

There is a method of obtaining a service operator uniform resource identifier (URI) from a specific table among T/S/C service bootstrap information. For example, a service operator provides service discovery information.

There is a method of obtaining a service discovery information URI from a specific table among the T/S/C service bootstrap information.

There is a method of obtaining a service discovery information file URI transmitted in a non-real-time carousel in the same way as the T/S/C service bootstrap information.

There is a method of obtaining the service discovery information URI from a specific table among service bootstrap information in a common interface conditional access module (CICAM).

There is a method of using a hardwired linkage URI. Specifically, through an agreement between an operator and a CE, a hardwired URI is provided and service discovery information is obtained through the hardwired URI.

The above-described second and third methods for service discovery will be described in detail below.

First, in order to provide a service guide into which a service guide of a traditional channel is integrated, necessary information corresponding to traditional information should be defined. Unique ID information of a traditional service guide may be obtained as illustrated in FIG. 3. As illustrated in FIG. 3, the broadcast signal reception apparatus according to embodiments of the present disclosure distinguishes between service discovery information and audio/video (A/V) data through filtering of a TS packet and service discovery establishes a service guide DB which is currently being received by a signaling parser.

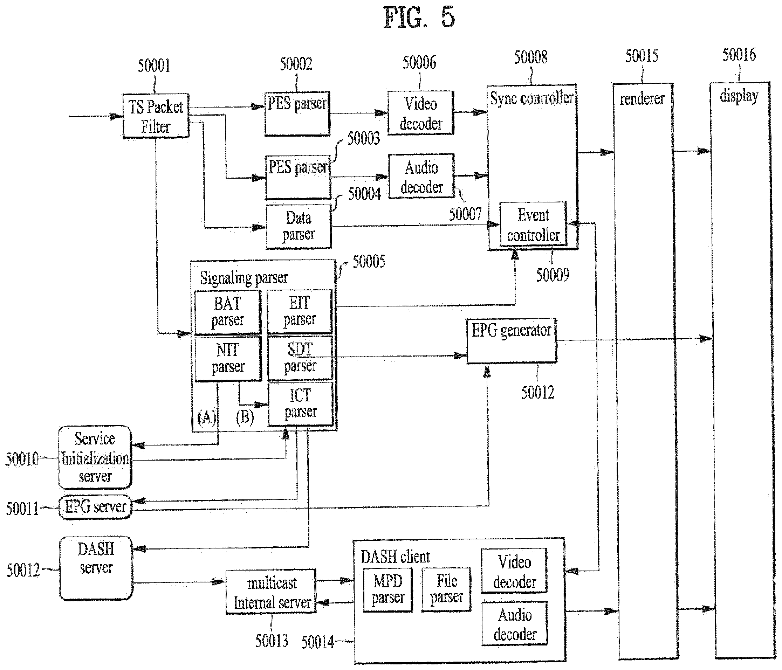

FIG. 5 illustrates a configuration of a broadcast signal reception apparatus according to embodiments of the present disclosure.

A TS packet filter 50001 processes a TS packet included in a broadcast signal. The TS packet may mean an MPEG-2 TS packet.

A packetized elementary stream (PES) parser 50002 processes a stream included in the TS packet. The stream may mean a packetized elementary stream. The stream may include a video stream.

A PES parser 50003 processes a stream included in the TS packet. The stream may mean a packetized elementary stream and the stream may include an audio stream.

A data parser 50004 processes data included in the TS packet. The data may include content related to a broadcast program or an event related to an application.

A signaling parser 50005 processes signaling data included in the TS packet. The signaling data may include a bouquet association table (BAT), a network information table (NIT), an event information table (EIT), a service description table (SDT), and an identification channel table (ICT). The signaling parser 50005 may include a BAT parser, an EIT parser, an NIT parser, an SDT parser, an ICT parser, etc.

A video decoder 50006 decodes video data included in the TS packet.

An audio decoder 50007 decodes audio data included in the TS packet.

A controller 50008 controls synchronization of the decoded video data and the decoded audio data.

A controller 50009 controls an event for data other than the video data and the audio data. The controller 50009 may receive the signaling data from the signaling parser 50005 and control an event based on the signaling data.

A service initialization server 50010 may obtain URI information for service discovery from the signaling data of the signaling parser 50005. Specifically, the signaling data includes service bootstrap information for service scanning. The signaling parser 50005 may provide service discovery information URI to the server 50010 based on specific table information among the service bootstrap information. Method (A) of FIG. 5 indicates a process in which the broadcast signal reception apparatus according to embodiments of the present disclosure acquires the ICT based on a service discovery URI of the NIT among the signaling data.

Specifically, the broadcast signal reception apparatus according to embodiments of the present disclosure may obtain ICT information from the server based on the service discovery URI information of the NIT. The ICT parser of the signaling parser 50005 processes the ICT information obtained from the server.

The broadcast signal reception apparatus according to embodiments of the present disclosure may acquire the ICT information through a linear channel. Method (B) of FIG. 5 indicates a process in which the broadcast signal reception apparatus according to embodiments of the present disclosure acquires and processes the ICT information from signaling data received through the linear channel.

An EPG server 50011 may provide service guide information based on the ICT information of the ICT parser to an EPG generator 50012.

A dynamic adaptive streaming over HTTP (DASH) server 50012 may provide bootstrap information for DASH data to a multicast internal server 50013 based on the ICT information.

A DASH client 50014 receives the DASH data from the multicast internal server 50013. The DASH client 50014 parses media presentation description (MPD) information included in the DASH data, parses a file included in the DASH data, decodes video data included in the DASH data, and decodes audio data included in the DASH data.

The EPG generator 50012 may receive EPG related signaling data from the signaling parser 5005 and receive EPG data from the EPG server 50011 to generate EPG data to be displayed.

A renderer 50015 may receive synchronized A/V data from the controller 50008 and receive DASH A/V data from the DASH client 50014 to perform rendering.

A display 50016 may display the rendered data and the EPG data. In the present specification, the display may be referred to as a displayer or a display unit.

The broadcast signal reception apparatus according to embodiments of the present disclosure provides a service discovery method for providing an IP service into which a traditional T/S/C channel and an IP channel are aggregated.

For example, in European broadcasting standard DVB based on an MPEG-2 system, a service discovery process and EPG information are defined through DVB SI and information of tables such as an NIT, a BAT, an SDT, and an EIT.

In acquiring the above-described service discovery information, service discovery information of a corresponding network may be acquired through the NIT that serves as a signaling function of receivable networks. (A) in FIG. 5 indicates an ICT acquisition process corresponding to the above-described second service discovery method and (B) in FIG. 5 indicates an acquisition process of the third service discovery method of acquiring the ICT channel through the linear channel.

The NIT identifies a network (e.g., a terrestrial, cable, or satellite network) that is currently receiving a bit stream and indicates a unique ID of the bit stream that the network is currently receiving through an original network ID and a transport ID (TS ID). The TS ID is a unique ID for identifying a TS multiplexed in a current delivery system.

The NIT may include an NIT for other networks in addition to an actual NIT for a main stream (for an S, T, and/or C channel) that is currently being received. Therefore, service discovery of an Internet linear channel may be performed in the table defining networks other than in the existing NIT for the main stream. In delivery systems other than a system for delivering this main stream, a network ID may be used to distinguish between networks. Accordingly, the broadcast signal transmission apparatus may extensively define the network ID value to identify the Internet linear channel corresponding to other networks. Method (A) of FIG. 5 is a method of acquiring the ICT through the service discovery URI in the NIT and Method (B) of FIG. 5 is a method of acquiring the ICT through an XML file or a binary code based on a carousel scheme through a broadcast network.

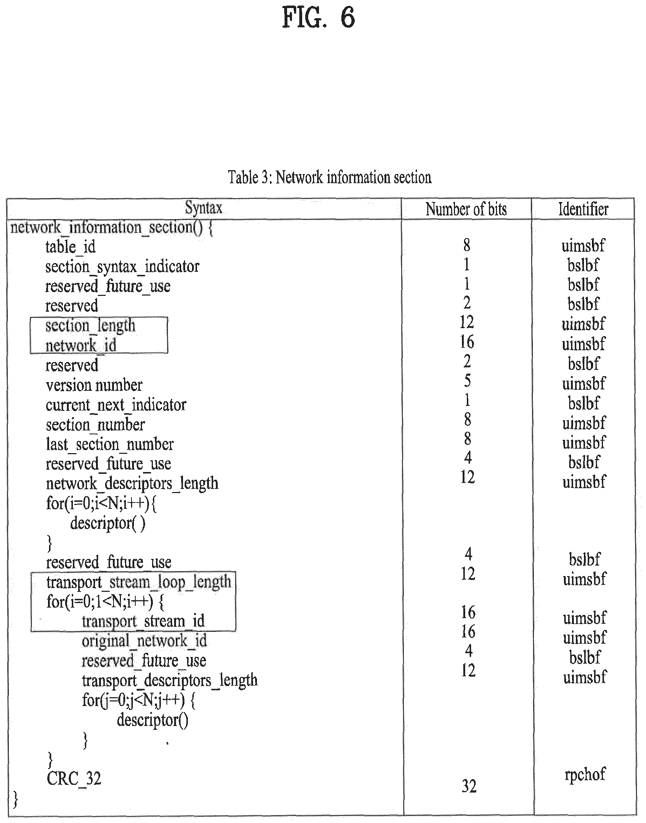

FIG. 6 illustrates an NIT.

A network information section of FIG. 6 means the NIT. Information contained in the NIT may follow the definition of the DVB standard.

A table ID (table_id) may identify the NIT.

A section syntax indicator (section_syntax_indicator) is a 1-bit field and may be set to a value of 1. The section syntax indicator includes information indicating a syntax identified by the NIT.

A reserved use field (reserved_future_use) and a reserved field (reserved) are reserved for future use.

A section length (section_length) indicates the number of bytes of a section.

A network ID (network_id) may be used to identify a delivery system and indicates unique ID of a bit stream received through a network. The delivery system refers to the concept of a physical unit carrying a TS.

A version number (version_number) indicates a version number of a sub-table.

A current next indicator (current_next_indicator) indicates whether the sub-table is a currently applicable service table.

A section number (section_number) indicates a number of the section.

A last section number (last_section_number) indicates a number of the last section.

A network descriptor length (network descriptors_length) indicates the length in bytes of a network descriptor.

A transport stream loop length (transport stream_loop_length) indicates the total length in bytes of a TS loop.

A transport stream ID (transport_ stream _id) is information used to identify a TS.

An original network ID (original_network_id) is information for identifying a network of an originating delivery system.

The broadcast signal reception apparatus according to embodiments of the present disclosure identifies a network that is currently receiving a bit stream, for example, a network of a terrestrial, cable, and/or satellite channel, based on the NIT. The broadcast signal reception apparatus defines unique ID of that bit stream that is being received by the corresponding network through an original network ID and/or a TS ID. The TS ID is a unique ID for identifying a TS multiplexed in a current delivery system.

Furthermore, the broadcast signal transmission apparatus may separately use an actual NIT for a main stream for a currently received S, T, and/or C channel and an NIT for other networks. Therefore, service discovery of an Internet linear channel may be performed in the table for other networks rather than in the existing NIT for the main stream. In delivery systems other than a system for delivering this main stream, a network ID may be used to distinguish between networks. Therefore, the broadcast signal transmission apparatus according to embodiments of the present disclosure may extensively use the network ID to identify the Internet linear channel corresponding to other networks.

The broadcast signal reception apparatus according to embodiments of the present disclosure may extend the network ID included in the NIT of FIG. 6 to use the network ID as service discovery URI information and perform service discovery for the Internet linear channel as in Method (A) of FIG. 5.

In addition, the broadcast signal transmission apparatus according to embodiments of the present disclosure may transmit an XML file or a binary code in a carousel manner through a broadcast network. In this case, the broadcast signal reception apparatus may obtain the ICT through the broadcast network as in Method (B) of FIG. 5.

The NIT may further include a descriptor through a sub-loop. The descriptor included in the NIT may include information about a service or a service list. A detailed configuration of the descriptor will be described below.

In this specification, the NIT may be referred to as first signaling information, second signaling information, and the like.

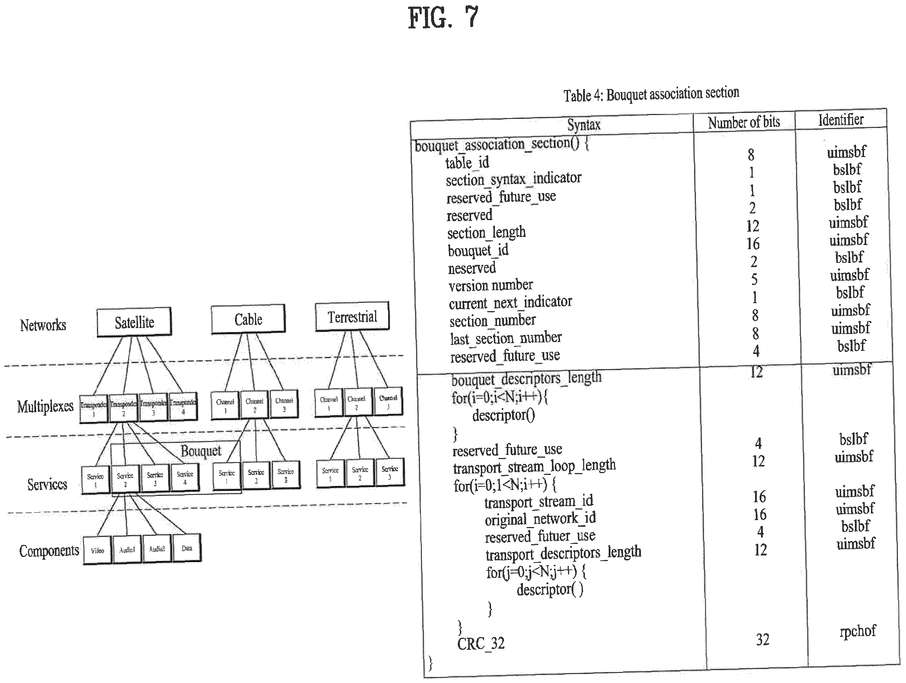

FIG. 7 illustrates a BAT.

The BAT includes signaling information about a service bundle called a bouquet by grouping services as illustrated in FIG. 7. Various service scenarios may be configured by grouping a plurality of streams/services transmitted over different networks through such grouping of services. That is, the broadcast signal transmission apparatus may group services in units of the bouquet and group received TSs and services, regardless of a network.

The broadcast signal transmission apparatus according to embodiments of the present disclosure may generate a service bundle called the bouquet by grouping services. The BAT includes signaling information about the service bundle.

Through this service bundle or service grouping, a plurality of streams/services transmitted by different networks may also be grouped to configure various service scenarios. That is, as illustrated in FIG. 7, the broadcast signal transmission apparatus may group services in units of the bouquet and group received TSs and services, regardless of a received network.

The broadcast signal reception apparatus according to embodiments of the present disclosure receives the signaling information through a BAT to signal a grouped service.

A table ID (table_id) indicates information for identifying the BAT.

A section syntax indicator (section_syntax_indicator) indicates information indicating a syntax signaled in the BAT.

A bouquet ID (bouquet_id) indicates information for identifying a service bundle.

A version number (version_number) indicates a version number of a sub-table.

A current next indicator (current_next_indicator) indicates whether the sub-table is a currently applicable service table.

A section number (section_number) indicates a number of a section.

A last section number (last_section_number) indicates a number of the last section.

A bouquet descriptor length (bouquet description_length) indicates the total length in bytes of the bouquet described in the BAT.

A transport stream loop length (transport stream_loop_length) indicates the total length of bytes of a TS loop.

A transport stream ID (transport stream_id) indicates information for identifying a TS multiplexed in the delivery system.

An original network ID (original_network_id) indicates information for identifying a network ID of an originating delivery system.

The broadcast signal transmission apparatus according to embodiments of the present disclosure describes and discovers a bundled bouquet of not only the service of the existing main stream or the linear channel but also the service of the Internet linear channel, based on the bouquet ID, the TS ID, and/or the original network ID included in the BAT.

Specifically, the bouquet ID may identify a bouquet including the service of the Internet channel. The TS ID may identify a TS including the service of the Internet channel. The original network ID means a network ID of the originating delivery system and may indicate a network for the service of the Internet channel. The broadcast signal reception apparatus according to embodiments of the present disclosure may parse the BAT to discover the service of the Internet channel.

The BAT may further include a descriptor through a sub-loop. The descriptor included in the BAT may include information about a service or a service list and a detailed configuration of the descriptor will be described below.

In this specification, the BAT may be referred to as first signaling information, second signaling information, or the like.

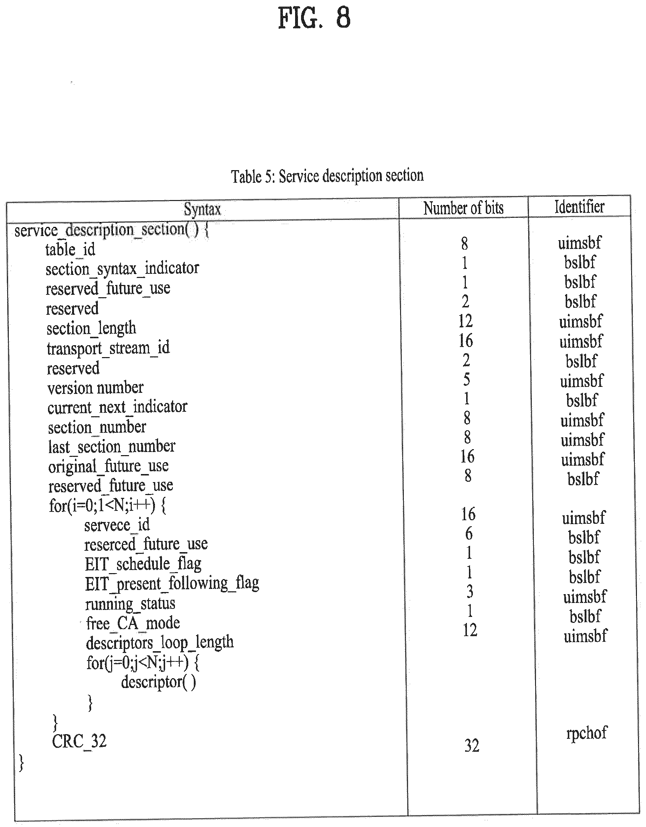

FIG. 8 illustrates an SDT.

The SDT is a table that defines a service description of data transmitted over a current network and in a TS. Like the NIT, a plurality of services may be defined based on a TS ID and an original network ID. That is, one service may be distinguished by an original network ID, a transport ID, and/or a service ID. There is no duplicate service ID within one original network ID (typically the same value as the network ID) and the service ID has a unique value.

The broadcast signal transmission apparatus and the broadcast signal reception apparatus according to embodiments of the present disclosure may provide an integrated form of EPG for data received from an actual network using an ICT. Accordingly, the broadcast signal reception apparatus may parse the ICT and display service guide information by integrating the above-described channel or network for the user. The ICT includes one integrated channels service guide, i.e., information in the form of an EPG (or electronic service guide (ESG)), provided by the EPG generator of the reception apparatus to the user.

Data received from an actual network includes not only signaling data or signaling information but also data according to component type. In addition to A/V data, there may also be Internet data and synchronization data (e.g., MPEG timeline and external media information (TEMI)) transmitted for synchronization. The data parser of the broadcast signal reception apparatus parses such data. Accordingly, the broadcast signal reception apparatus may provide an event linkage service with an actual channel at a timing transmitted at a constant rate.

The ICT contains media data to be received over an actual Internet channel. The ICT includes MPD_URI. The broadcast signal reception apparatus may obtain an MPD capable of receiving content through MPD_URI. Since the DASH server serves as a content origin, the DASH server may provide URI information that enables dynamic allocation of a multicast/unicast server according to network state. The ICT may include such URI information. In the case of multicast, the MPD may include a multicast server address serving as a CDN close to a client, so that the broadcast signal reception apparatus may receive a unicast/multicast adaptive service.

A DASH client may receive, decode, and synchronize an A/V DASH segment using MPD. Then, the display unit of the broadcast signal reception apparatus may render media data like a linear channel and play out on the display.

The broadcast signal transmission apparatus according to embodiments of the present disclosure may transmit a broadcast signal including the SDT, and the broadcast signal reception apparatus according to embodiments of the present disclosure may receive the broadcast signal including the SDT.

A table ID (table_id) indicates information for identifying the SDT.

A section syntax indicator (section_syntax_indicator) indicates information indicating a syntax signaled in the SDT.

A transport stream ID (transport_stream_id) indicates information for identifying a TS described in the SDT within the delivery system.

A version number (version_number) indicates a version number of a sub-table.

A current next indicator (current_next_indicator) indicates whether the sub-table is a currently applicable service table.

A section number (section_number) indicates a number of a section.

A last section number (last_section_number) indicates a number of the last section.

An original network ID (original_network_id) indicates information for identifying a network ID of an originating delivery system.

A service ID (service_id) indicates information for identifying a service within a TS.

An EIT schedule flag (EIT_schedule flag) indicates whether event information table (EIT) schedule information for a service is present in a current TS.

An EIT present following flag (EIT_present_following_flag) indicates whether EIT present/following information for a service is present in the current TS.

A running status (running_status) indicates the status of a service. The status of the service may include whether the service is running, starting in a few seconds, paused, or off-air.

A free CA mode (free_CA_mode) indicates whether all component streams of a service are scrambled. The free conditional access (CA) mode indicates a mode of controlling one or more streams controlled by a CA system, which is a system for controlling subscribers accessing a service.

The SDT is a table that defines a network that is currently transmitting a stream and defines a service description of data transmitted within a TS. The SDT may describe a plurality of services based on the TS ID and the original network ID, similarly to the above-described NIT. The broadcast signal transmission apparatus may identify one service based on the original network ID, TS ID, and/or service ID. There is no duplicate service ID on the network identified by the original network ID and the service ID has a unique value. In addition, the original network ID typically has the same value as the network ID.

FIGS. 6 to 8 illustrate signaling information transmitted and received by the broadcast signal transmission apparatus and the broadcast signal reception apparatus according to embodiments of the present disclosure and fields defined in each table may follow the definition of the DVB SI standard. Furthermore, the broadcast signal transmission apparatus and the broadcast signal reception apparatus according to embodiments of the present disclosure may add and extensively define information included in tables used for service description and service discovery in the traditional linear channel for service description and service discovery for the Internet channel. Accordingly, the broadcast signal reception apparatus according to embodiments of the present disclosure provides an Internet channel service to a user while providing backward compatibility with the traditional linear channel. The broadcast signal reception apparatus may provide the user with an EPG into which the traditional linear channel and the Internet channel are integrated.

The broadcast signal transmission apparatus according to embodiments of the present disclosure may transmit a broadcast signal including a new table. The ICT illustrated in FIG. 5 may include service guide information for a service received on an active network. The EPG generator 50012 of the broadcast signal reception apparatus receives ICT information and provides one channel service guide to the user in an integrated EPG form.

The broadcast signal transmission apparatus may transmit signaling data including signaling information and broadcast data including AV data rather than signaling data through a network. The broadcast signal transmission apparatus may separately process the signaling data and the broadcast data based on a component type.

The data parser 50004 of the broadcast signal reception apparatus parses Internet data and synchronization data (e.g., MPEG TEMI) transmitted for synchronization in addition to the A/V data. Accordingly, the broadcast signal reception apparatus may provide an event linkage service for an actual channel at a timing transmitted at a constant rate.

The ICT according to embodiments of the present disclosure may include media data to be received over the actual Internet channel. The ICT includes an MPD URI. The broadcast signal reception apparatus may obtain an MPD capable of receiving content through the MPD URI of the ICT. The DASH server serves as a content origin capable of receiving content. Accordingly, the DASH server 50012 may perform dynamic allocation of a multicast/unicast server according to network state through the MPD URI. In the case of multicast, the MPD may include a multicast server address serving as a CDN close to a client and the broadcast signal reception apparatus may receive a unicast/multicast adaptive service.

The DASH client 50014 receives and decodes an A/V DASH segment through the MPD. Further, the DASH client 50014 renders the media data 50015 like the linear channel and displays the media data on the display 50016.

In this specification, the SDT may be referred to as first signaling information, second signaling information, or the like.

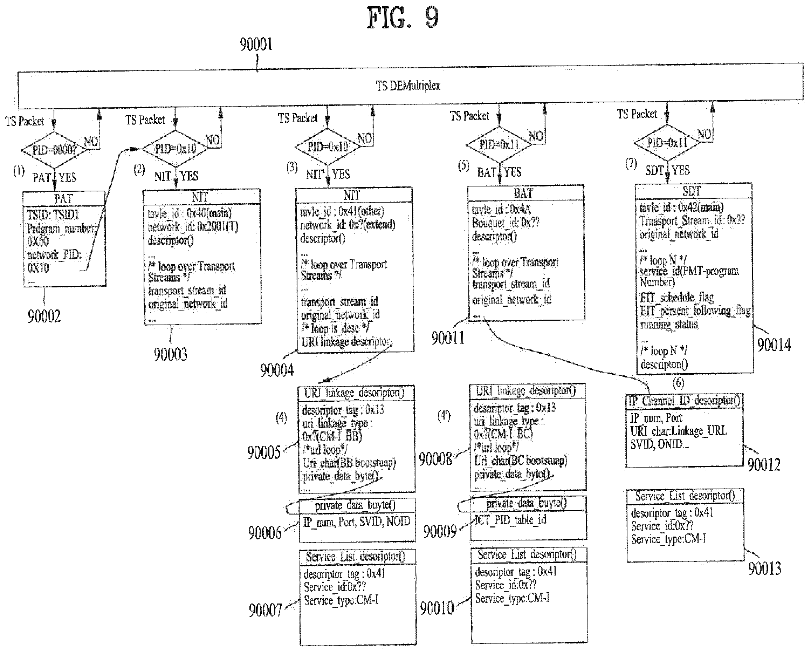

FIG. 9 illustrates a process of parsing SI by a broadcast signal reception apparatus according to embodiments of the present disclosure.

The broadcast signal transmission apparatus according to embodiments of the present disclosure provides an Internet channel scanning method based on a DVB network. The broadcast signal reception apparatus or the signaling parser of the broadcast signal reception apparatus according to embodiments of the present disclosure may parse SI to perform service discovery as illustrated in FIG. 9. In addition, the broadcast signal reception apparatus or the display unit of the broadcast signal reception apparatus may integrate a service guide of a channel and a service guide of an Internet channel. To this end, corresponding unique ID information is used.

The broadcast signal reception apparatus according to embodiments of the present disclosure may parse the SI according to a packet identifier (PID) value of a header of a TS packet. For the PID value of 0x00 of the TS packet header, the broadcast signal reception apparatus receives an MPEG-2 program specific information (PSI) program association table (PAT) and then acquires Network_PID. For the PID value of 0x01 of the TS packet header, the broadcast signal reception apparatus receives an NIT. The NIT may signal a main (actual) network and other networks. Here, the networks are identified by table IDs (0x40 and 0x41) although the PID is the same as 0x01. The NIT including information regarding the main network identifies currently received streams based on a network ID (NID), a TS ID (TSID), and/or an original network ID (ONID).

The NIT related to other networks includes information for bootstrapping a service of the Internet channel that should be currently received. Therefore, the NIT includes a network_id field indicating the Internet linear channel.

The broadcast signal reception apparatus according to embodiments of the present disclosure may use unique ID information necessary for integrating a service guide for the traditional channel as described above. The broadcast signal reception apparatus according to embodiments of the present disclosure may parse the ID information for the service guide as follows.

A TS demultiplexer 90001 may parse signaling information from a TS included in a broadcast signal. The TS demultiplexer may correspond to the TS packet filter 50001. The TS demultiplexer 90001 may identify a packet based on the PID.

When a TS packet includes information 90002 about the PAT, the broadcast signal reception apparatus according to embodiments of the present disclosure parses the PAT. The PAT includes ID information about a network (network_PID).

When the TS packet includes information 90003 about the NIT, the broadcast signal reception apparatus parses the NIT. The NIT includes an ID of the NIT, an NID, a TSID, and an ONID.

When the TS packet includes information 900004 about the NIT, the broadcast signal reception apparatus parses the NIT. An ID (table_id) of the NIT may include information about a main or actual network and information about other networks.

For example, when service guide information follows the format of MPEG-2 PSI, the broadcast signal reception apparatus receives the PAT corresponding to the case in which the PID value of the TS packet header is 0x00. The broadcast signal reception apparatus receives network_PID corresponding to the case in which the PID value is 0x01. When table_id of the NIT is 0x40, the NIT includes the information about the main network and, when table_id of the NIT is 0x41, the NIT includes the information about other networks.

The NIT 90003 for the main network includes an NID (network_id), a TSID (transport stream_id), and an ONID (original_network_id) and the broadcast signal reception apparatus may identify a currently received stream based on the NID (network_id), the TSID (transport_stream_id), and the ONID (original_network_id).

The broadcast signal transmission apparatus according to embodiments of the present disclosure may transmit a TS packet including the information 90004 about the NIT in order to bootstrap the service of the Internet channel.

The NIT 90004 for other networks may include network_id and network_id may indicate the Internet linear channel. The NIT 90004 may include an ONID (original_network id) and a TSID (transport_stream_id) and the broadcast signal reception apparatus may uniquely identify a service based on the ONID and the TSID.

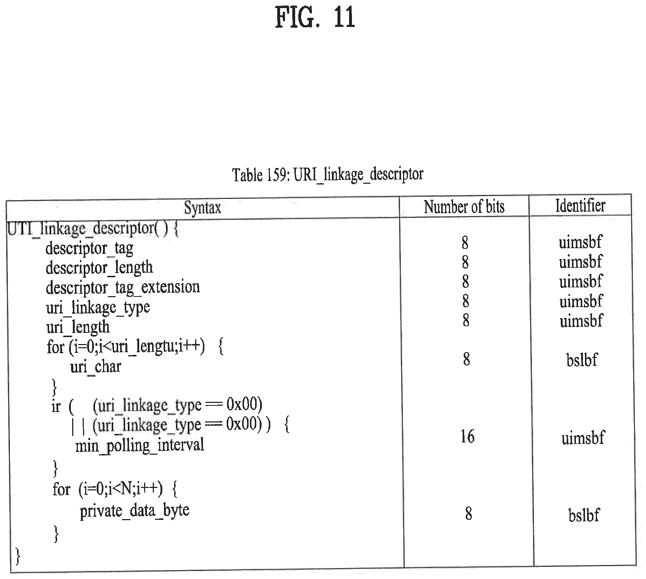

Data for the Internet channel does not include the TSID. Therefore, information unique_id that may replace the TSID is required for the data for the Internet channel. The unique ID information of the TSID may be replaced by URI_linkage_descriptor 90005 or 90008. URI_linkage descriptor includes URI address information. Since each operator has a different URI string, the TSID may be replaced with a corresponding URI string. Additionally, the broadcast signal reception apparatus may receive discovery information, including ICT channel information, and MPD URI information capable of receiving an actual DASH segment, based on the URI address information. A detailed configuration of URI_linkage_descriptor will be specifically described with reference to FIG. 11.

The broadcast signal reception apparatus according to embodiments of the present disclosure may receive service discovery information for acquiring the linear Internet channel based on broadband and/or broadcast. A descriptor when an acquisition path is broadband is URI_linkage descriptor 90005 and a descriptor when the acquisition path is broadcast is URI_linkage descriptor 90008.

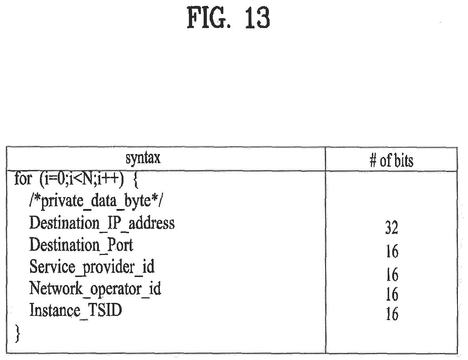

When the acquisition path is broadband, URI_linkage descriptor 90005 includes private data 90006. A detailed configuration of the private data 90006 based on the broadband will be described with reference to FIG. 13 according to the invention.

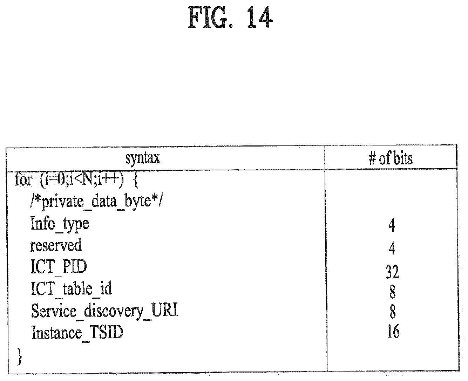

If the acquisition path is broadcast, URI_linkage descriptor 90008 includes private data 90009. A detailed configuration of the private data 90009 based on the broadcast will be described with reference to FIG. 14 according to the invention.

In addition, the broadcast signal transmission apparatus according to embodiments of the present disclosure may transmit information service_list_descriptor about a service or service list based on broadband or broadcast as sub-configuration information of the NIT 90004. The service list information based on broadband is service_list descriptor 90007 and the service list information based on broadcast is service_list_descriptor 90010. The service list information 90007 and 90010 provide unique ID information for a service such as a service ID and a service type.

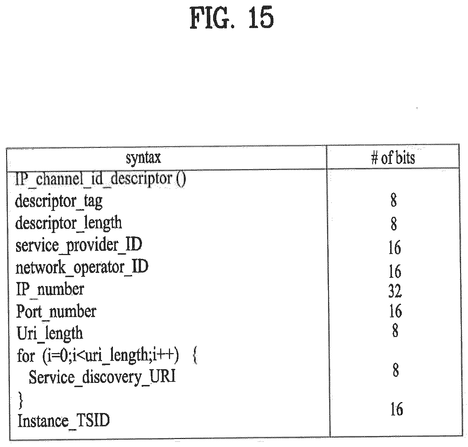

When the TS packet includes information 90011 about a BAT, the broadcast signal reception apparatus according to embodiments of the present disclosure parses the BAT 90011. The BAT 90011 includes information bouquet_id for identifying a bouquet, which is a service bundle, and includes a TSID (transport stream_id) and an ONID (original_network_id), which are service description information for a broadcast channel. In order to provide a service description for the Internet linear channel, the broadcast signal transmission apparatus additionally provides information that replaces the TSID for the linear channel. The BAT 90011 may additionally include a descriptor 90012 for a service discovery URI and a service list descriptor 90013, as sub-configuration information. A detailed configuration of the descriptor 90012 and the service list descriptor 90013 will be described with reference to FIG. 15.

When the TS packet includes information 90014 about the SDT, the broadcast signal reception apparatus according to embodiments of the present disclosure parses the SDT 90014. A detailed configuration of the SDT 90014 has been described with reference to FIG. 8.

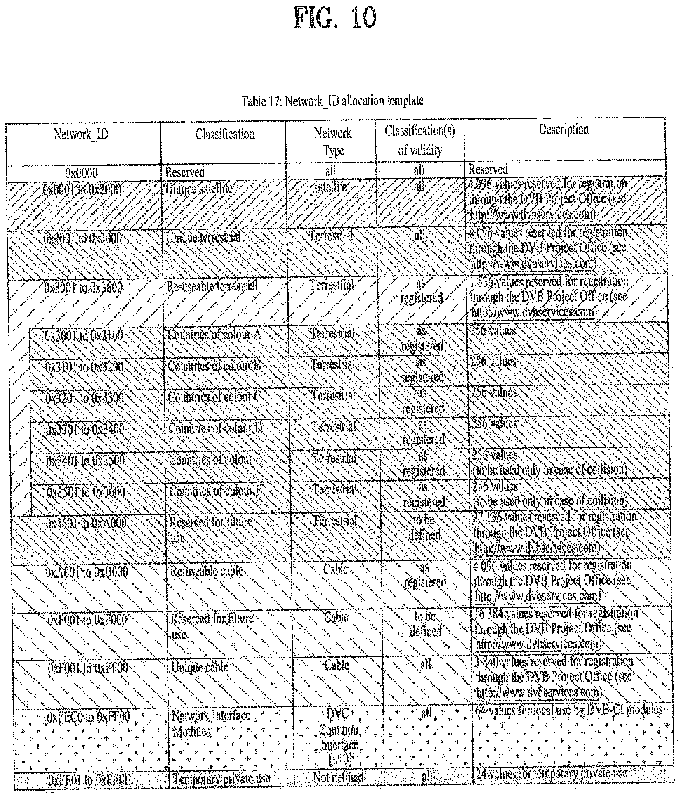

FIG. 10 illustrates a network ID.

The network ID of FIG. 10 includes not only a DVB network_id value but also an Internet channel value.

Although data received through a channel may be identified using unique information such as an ONID and a TSID, an ID of data received through an Internet channel has no TSID. Therefore, a unique ID for replacing a TSID attribute is required. Accordingly, URI_linkage descriptor may include a URI address and URI address information may replace the unique information of the TSID. Since each operator has a different URI string, the TSID may be replaced with the string. Such a URI has an additional role. That is, the broadcast signal reception apparatus or the signaling decoder of the broadcast signal reception apparatus may receive and decode service discovery information (ICT channel) and MPD URI information capable of receiving an actual DASH segment, based on the URI address.

The broadcast signal transmission apparatus and the broadcast signal reception apparatus according to embodiments of the present disclosure may transmit and receive a broadcast signal using various networks. The networks may include an S channel, a T channel, and a C channel and further include an Internet channel. An NIT, which is signaling information for a network, may include network_id and the broadcast signal transmission apparatus may allocate the Internet channel together with the S channel, the T channel, and the C channel to network_id.

FIG. 11 illustrates URI_linkage descriptor.

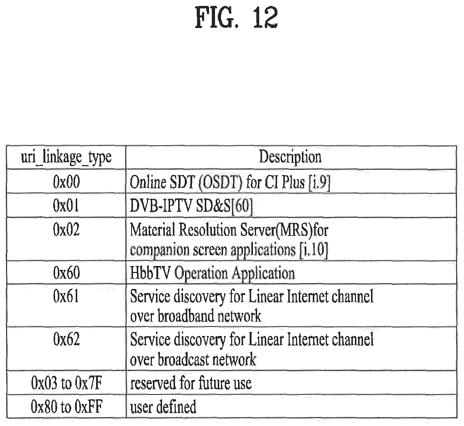

In the following, the claimed invention will be described with reference to Figs. 12 to 14.

URI_linkage descriptor includes a new value for service discovery through the Internet. The new value corresponds to uri_linkage_type.

The URI descriptor includes type information uri_linkage_type. The broadcast signal transmission apparatus newly allocates a value for service discovery information for an Internet channel to the type information. A detailed configuration of the type information will be described with reference to FIG. 12 according to the invention.

The URI descriptor includes private data. A detailed configuration of the private data depending on whether a service discovery acquisition path is broadband or broadcast will be described with reference to FIGS. 13 and 14 according to the invention, respectively.

FIG. 12 illustrates uri_linkage_type according to the invention.

uri_linkage_type includes an attribute called service discovery information for acquiring a linear Internet channel. An acquisition path includes broadband and broadcast. For the case in which uri_linkage_type is 0x61, the broadcast signal reception apparatus or the signaling parser of the broadcast signal reception apparatus acquires the service discovery information for the Internet channel through the Internet (broadband network). For the case in which uri_linkage_type is 0x62, the broadcast signal reception apparatus or the signaling parser of the broadcast signal reception apparatus acquires the service discovery information for the Internet channel based on a broadcast network. When uri_linkage_type is 0x62, a reception method similar to a method of acquiring DVB SI through a currently received DVB T, S, or C network is applied. Here, 0x61 or 0x62 is a temporary value and, in this specification, these values may be extended.

Information about the URI linkage type of FIG. 12 according to the invention includes the service discovery information for obtaining the linear Internet channel. A path through which the broadcast signal reception apparatus acquires the linear Internet channel includes broadband and/or broadcast.

For example, when the value of uri_linkage_type is 0x00, the type of the URI linkage information represents an online SDT (OSDT) for CI Plus. When the value of uri_linkage_type is 0x01, the type of the URI linkage information indicates DVB-IPTV service discovery and selection (SD&S). When the value of uri_linkage_type is 0x02, the type of the URI linkage information indicates a material resolution server (MRS) for a companion screen application. When the value of linkage_type is 0x60, the type of the URI linkage information indicates an HbbTV operation application.

Furthermore, the broadcast signal transmission apparatus according to embodiments of the present disclosure extensively defines uri_linkage_type. For example, when the value of uri_linkage_type is 0x61, the type of the URI linkage information indicates service discovery information for a linear Internet channel over a broadband network. When the value of uri_linkage_type is 0x62, the type of the URI linkage information indicates service discovery information for the linear Internet channel over a broadcast network. Therefore, when the value of uri_linkage_type is 0x61, the broadcast signal reception apparatus acquires the service discovery information through the Internet and, when the value of uri_linkage_type is 0x62, the broadcast signal reception apparatus acquires the service discovery information while maintaining compatibility with DVB SI through a currently received T channel, S channel, and/or C channel.

FIG. 13 illustrates a private data byte when uri_linkage_type is 0x61 according to the invention.

If uri_linkage_type is 0x61, the private data byte has the following syntax.

Destination_IP_address indicates a service discovery IP address.

Destination_Port indicates a port number.

service_provider_id indicates a service provider.

Network operator_id indicates a network operator that provides a service.

Instance_TSID indicates a temporary TSID value to replace a TSID.

Information included in the private data 90006 transmitted through broadband will be described below.

The private information includes a destination IP address (Destination_IP_address). The destination IP address indicates a service discovery IP address. A destination port (Destination_Port) indicates a port number. A service provider ID (Service_provider _id) indicates a service provider. A network operator ID (Network operator_id) indicates a network operator that provides a service. An instance TSID (Instance_TSID) represents a temporary TSID value to replace the TSID.

The broadcast signal transmission apparatus according to embodiments of the present disclosure adds URL information for service discovery to the private data 90006 instead of the destination IP address. Since IP information is converted into a string and becomes a URL, the URL information corresponds to the IP information.

Similarly, the broadcast signal transmission apparatus according to embodiments of the present disclosure adds the URL information for service discovery to the private data 90006 instead of the destination port.

The broadcast signal transmission apparatus according to embodiments of the present disclosure transmits the private data 90006 in URI_linkage descriptor 90005 based on broadband. The broadcast signal transmission apparatus replaces Destination_IP_address, Destination_Port, Service_provider_id, Network operator_id, and Instance_TSID included in the private data 90006 with the URI information for service discovery for the Internet linear channel. The broadcast signal reception apparatus provides an integrated EPG for a broadcast channel including the Internet channel and performs service discovery for the Internet channel using the URI information of URI_linkage descriptor 90005.

FIG. 14 illustrates a private data byte when uri_linkage_type is 0x62 according to the invention.

If uri_linkage_type is 0x62, the private data byte has the following syntax.

Info-type is a field for identifying whether received service discovery information is an XML type or binary code.

ICT_PID indicates a PID of a TS packet including service discovery table information.

ICT_table_id indicates table_id for identifying a service discovery table.

service discovery_URI indicates a file URI when info_type is an XML file.

As described above, URI_linkage_descriptor includes information to replace the TSID. Based on this information, a sub-loop of an NIT and a BAT signals a stream unique ID and a service ID included in service_list_descriptor or service_descriptor. The BAT groups streams and services, regardless of a network of a current receiver, to signal a service bundle called a bouquet. The BAT forms a logical bundle at a network and/or transport level through stream unique information such as bouquet_id information, an ONID, and/or a TSID. However, since the Internet linear channel does not have the TSID, signaling at an Internet linear channel level is required. Hereinafter, the present specification describes two methods to solve this issue. The BAT includes a new descriptor or URI_linkage_descriptor defined above further includes unique information to replace the TSID.

The information included in the private data 90009 transmitted through broadcast is described below.

An information type (Info_type) indicates whether the service discovery information received by the broadcast signal reception apparatus is an XML type or binary code.

A packet ID (ICT_PID) indicates a PID of a TS packet including the service discovery table information.

A table ID (ICT_table_id) indicates an ID of a table that may identify the service discovery table.

A service discovery URI (Service discovery_URI) indicates a file URI when the information type is an XML file.

An instance TSID (instance_TSID) indicates a temporary TSID that replaces the TSID.

The method for the broadcast signal reception apparatus to obtain the service discovery information for the Internet channel has been described with reference to FIGS. 9 to 14. The broadcast signal reception apparatus receives the NIT for other networks and parses URI_linkage descriptor included in the NIT based on broadband or broadcast. In addition, the broadcast signal reception apparatus acquires an additionally defined service discovery URI instead of the TSID through the private data included in each URI_linkage descriptor.

Furthermore, in the broadcast signal reception apparatus according to the embodiments of the present disclosure, a sub-loop of the NIT 90004 and/or the BAT 90011 includes a service list descriptor (service_list_descriptor) or a service descriptor (service_descriptor) 90007, 90010, or 90013. The service list descriptor (service_list_descriptor) or the service descriptor (service_descriptor) 90007, 90010, or 90013 includes a stream unique ID (stream_unique_id) and a service ID (service_id).

As described above with reference to FIG. 7, the BAT 90011 groups streams and services in a current receiver regardless of a network and signals a service bundle called a bouquet. The BAT 90011 provides signaling for a logical bundle of network and transport levels based on the bouquet ID (bouquet_id), the ONID (original_network_id), and the TSID (transport_stream_id). Since the Internet linear channel may not include the TSID, signaling for the Internet linear channel level is necessary.

The broadcast signal transmission apparatus according to the invention transmits the private data in URI_linkage descriptor 90008 based on broadcast. The broadcast signal transmission apparatus replaces the information type (Info_type), the packet ID (ICT_PID), the table ID (ICT_table_id), the table ID (ICT_table_id), the service discovery URI (Service discovery_URI), and/or the instance TSID (instance_TSID) with the URI information for service discovery for the Internet linear channel. The broadcast signal reception apparatus provides an integrated EPG for a broadcast channel including the Internet channel and performs service discovery for the Internet channel using the URI information of URI_linkage_descriptor 90008.

Accordingly, the broadcast signal transmission apparatus according to embodiments of the present disclosure adds unique information for replacing the TSID to uri_linkage descriptor or additionally define the descriptor in the BAT as described above. Specifically, the BAT may include IP channel_ID descriptor. A configuration of IP_channel_ID_descriptor will be described in detail with reference to FIG. 15.

FIG. 15 illustrates IP_channel_ID_descriptor.

When the BAT includes a descriptor having stream unique information that may replace the TSID, IP channel_ID descriptor may be defined as follows.

URI_linkage descritor or IP channel_id descriptor signals network/stream unique information. A service list descriptor signals a newly defined service_id value and service_type to identify a service for an Internet linear channel. Referring to the signaling parsing process as in FIG. 7, a signaling structure based on the ONID, service_URI, and/or service_id is configured and service ID and bouquet attributes may be defined.

The IP channel ID descriptor (IP_channel_ID_descriptor) 90012 includes unique information about a network and a stream. Similarly, URI_linkage_descritor 90005 or 90008 also includes the unique information about the network and the stream.

A descriptor tag (descriptor_tag) and descriptor length (descriptor_length) identify the descriptor and indicate the length of the descriptor.

A service provider ID (service_provider_ID) indicates information for identifying a service provider for an IP channel.

A network operator ID (network_operator_ID) indicates information for identifying a network operator.

An IP number (IP_number) indicates a number for an IP channel.

A port number (Port_number) indicates a port number for the IP channel.

The IP channel ID descriptor (IP_channel_ID_descriptor) 90012 includes a service discovery URI (service discovery_URI) for service discovery for an Internet linear channel. The IP channel ID descriptor 90012 also includes an instance TSID (instance_TSID) for replacing a TSID. The instance TSID (instance_TSID) may have a value of an instance TSID for replacing the TSID.

The service list descriptor 90013 is information for identifying a service for the Internet linear channel and includes a service ID (service_id) and a service type (service_type) for the service of the Internet linear channel.

Accordingly, the broadcast signal reception apparatus identifies a network by parsing the ONID (original_network id) of the BAT 90011 and parses the IP channel ID descriptor (IP channel_ID descriptor) 90012 to obtain the service of the Internet linear channel based on the service discovery URI information. Furthermore, the broadcast signal reception apparatus may obtain a service ID and a service type based on the service list descriptor 90013.

The broadcast signal transmission apparatus according to embodiments of the present disclosure may include URI information for discovering the service for the Internet linear channel by extensively defining an IP number (IP_number), a port number (Port_number), a network operator ID (network operator_ID), and a service provider ID (service_provider_ID) included in the IP channel ID descriptor (IP channel_ID descriptor) 90012. The broadcast signal reception apparatus may receive the integrated EPG based on the IP channel ID descriptor (IP channel_ID descriptor) 90012 and obtain the URI information.

The broadcast signal transmission apparatus may signal service discovery by configuring a service bundle for each logical bouquet ID unit.

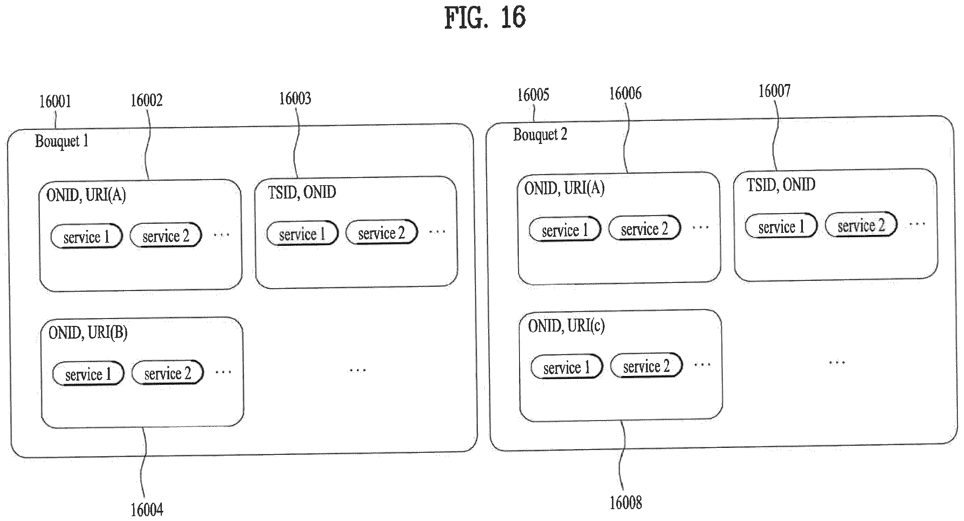

FIG. 16 illustrates a bouquet.

The extended information described above may be applied to service bundling. Through a logical bouquet ID unit, service bundling as illustrated in FIG. 16 may be configured. Here, a URI may be replaced with IP_Port, service_provider_id, Network_operator_id, and instance_TSID fields having a value of 0x61.

The broadcast signal reception apparatus according to embodiments of the present disclosure may signal a service bundle based on bouquet ID information.

Bouquet 1 16001 and bouquet 2 16005 may be identified based on a bouquet ID (bouquet_id).

The bouquet 1 16001 may include service bundles 16002, 16003, and 16003 which are a group of multiple services. The bouquet 2 16005 may include service bundles 16006, 16007, and 16008 which are a group of multiple services. As described above in FIG. 7, the bouquet includes a group of multiple streams or services transmitted over various networks. The service bundle may be represented by an ONID (original_network_id). In the case of services for a T channel, an S channel, and a C channel among various networks, the service bundle may be represented through a TSID (transport stream_id) (16003 and 16007). The service for an Internet linear channel among various networks may be represented based on a URI (16002, 16004, 16006, and 16008). For example, the service bundle 16002 may be discovered based on URI A. The service bundle 16008 may be discovered based on URI C. As described above with reference to FIGS. 9 to 15, the URI information of FIG. 16 may be replaced with the IP number (IP_number), the port number (Port_number), the service provider ID (Service_provider _ID), the network operator ID (Network operator_id), and/or the instance TSID (instance_TSID).

According to the above-described embodiments of the present disclosure, the broadcast signal reception apparatus may implement an IP-based TV service capable of providing the same user experience (UX) as the terrestrial, satellite, or cable linear channels. Furthermore, the broadcast signal reception apparatus may provide a channel guide integrated with the terrestrial, satellite, and cable channels by receiving open Internet-based native code, rather than an application based linear channel service. In addition, the broadcast signal reception apparatus may perform Internet channel scanning that may provide the same UX as the traditional linear service channel and perform service initialization based on an MPEG-2 system/DVB SI. In order to provide a service guide integrated with the traditional linear channel, the broadcast signal reception apparatus may provide network/stream/service unique signaling for identifying an Internet stream through the above-described signaling information, description, or table. The broadcast signal transmission apparatus provides a signaling method capable of replacing the TSID while maintaining compatibility with the TSID information within current SI, without additionally defining new information.

In order to provide a linear IP-based TV service, the broadcast signal transmission apparatus according to embodiments of the present disclosure extends a service bootstrap method of a traditional linear channel network. The unique additional information that should be defined to identify the linear IP-based TV service has been described with reference to FIG. 9. Therefore, the user may be provided with IP-based TV channel information added to the traditional linear channel EPG.

The broadcast signal reception apparatus according to embodiments of the present disclosure may access a service through a UI in which a traditional linear service and an OTT service are integrated in an apparatus supporting an RF based DVB tuner. In addition, the broadcast signal reception apparatus may support a media service providing the same UX as the traditional linear channels through the open Internet without an STB.

In the broadcast signal transmission apparatus according to the embodiments of the present disclosure, a traditional IP-based linear channel service is authenticated through subscription to a specific operator, for example, an ISP or network operator, and receives the IP linear service through an STB provided by the operator. Recently, with the advent of a connectivity TV, an IP linear service in an STB-less form may also be provided. For example, representative standard technology includes ATSC 3.0, IBB, and HbbTV. A client may receive various linear rich-media services by executing an application on an OS platform inside the TV. Various operators provide service applications developed thereby to be installed on a TV platform and define APIs that enable applications to perform service request/reception with respect to a server for receiving data for services. Based on a life cycle of the APIs, the client may access the applications through a TV UI and receive various services through the applications. The broadcast signal reception apparatus according to embodiments of the present disclosure may provide the above-mentioned various services to a user.

In addition, the broadcast signal reception apparatus according to embodiments of the present disclosure may provide an OTT channel as well as a linear TV. The OTT market increases the need for media applications necessary for an IP-based device. In the OTT market, the form of exclusive services is increasing with an independent platform and a service ecosystem only for the OTT. In other words, a consumption form of a standalone application ecosystem such as codec, protocol stack, application, and/or browser provided only by each OTT is increasing. The broadcast signal reception apparatus according to embodiments of the present disclosure solves issues such as an exclusive platform and dependency application operation. Furthermore, the broadcast signal reception apparatus proposes a method of discovering a service at a receiver native level and accessing a service server accessible by a client to receive a linear service, rather than providing UX similar to a linear channel service such as a T channel, an S channel, and/or a C channel, which should execute an application.

In addition, the broadcast signal reception apparatus according to embodiments of the present disclosure proposes a method of integrating standalone OTT platforms into one unified TV native platform, eliminating the burden of the user executing an OTT application, and receiving and providing OTT content on channel.

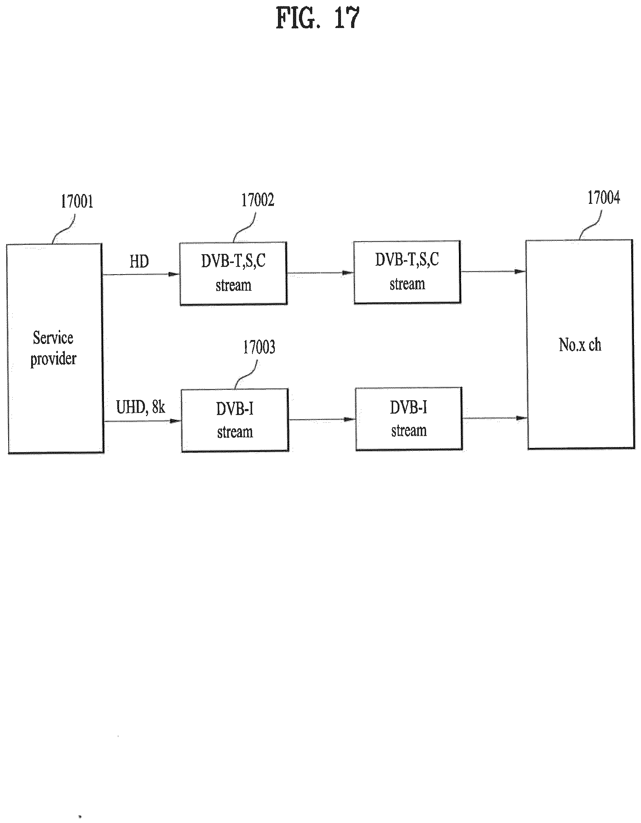

FIG. 17 illustrates a configuration for providing a hybrid service in one channel.

The broadcast signal transmission apparatus and the broadcast signal reception apparatus according to embodiments of the present disclosure may provide a service linkage between a DVB network and a DVB-I channel.

Specifically, a DVB stream and a DVB-I stream are simultaneously provided on the same dedicated channel, so that the streams may dynamically switch for a certain period. Content configured with different resolutions is provided on the same channel through streams delivered over different networks and is adaptively serviced according to a network state. For example, when content with high definition (HD) resolution is received over a DVB network and an I channel delivers the same content with a different resolution, if a user prefers bandwidth of a traditional channel to available bandwidth of the I channel, HD content may be provided to the user and, if the user prefers bandwidth of the I channel, ultra-high definition (UHD) or 8k content may be provided to the user. Therefore, the broadcast signal reception apparatus or the display unit of the broadcast signal reception apparatus according to embodiments of the present disclosure may provide the user with videos of various qualities in consideration of the bandwidth of the network during a specific period.

In other words, a tuner of the broadcast signal reception apparatus receives a broadcast signal including a DVB-T/S/C stream of a DVB-T/S/C network and a DVB-I stream of DVB-I. A controller (or event controller) of the broadcast reception apparatus may dynamically switch between the T/S/C stream and the DVB-I stream in consideration of a situation of the reception apparatus and the network and provide the changed stream to the user. In this case, the / T/S/C stream and the DVB-I stream are allocated to one channel, that is, the same dedicated channel, so that the controller may dynamically switch between the two streams.

DVB SI includes service and event related information. For example, a BAT includes information that enables grouping of one or more channels or services and an SDT includes stream information received at a service or channel level. An EIT includes information about time-based event corresponding to a specific service. Stream specific information may identify a stream received through MPEG-2 PSI.

A service provider 17001 may provide a DVB-T, S, and/or C stream 17002 and a DVB-I stream 17003. The DVB-T, S, and/or C stream 17002 means a stream of a terrestrial, satellite, and/or cable channel corresponding to HD and the DVB-I stream 17003 means a stream of an Internet channel corresponding to UHD and/or 8K.

The DVB-T, S, and/or C stream 17002 and the DVB-I stream 17003 may be provided through the same channel number 17004. HD service data is provided for a channel number x and UHD service data is provided for the channel number x, so that the broadcast signal reception apparatus may display data of various quality to the user in consideration of the bandwidth of the network during a specific period. Signaling information for the DVB-T, S, and/or C stream 17002 and the DVB-I stream 17003 has been described above. Hereinafter, signaling information for simultaneously transmitting and dynamically changing the DVB-T, S, and/or C stream 17002 and the DVB-I stream 17003 will be described.

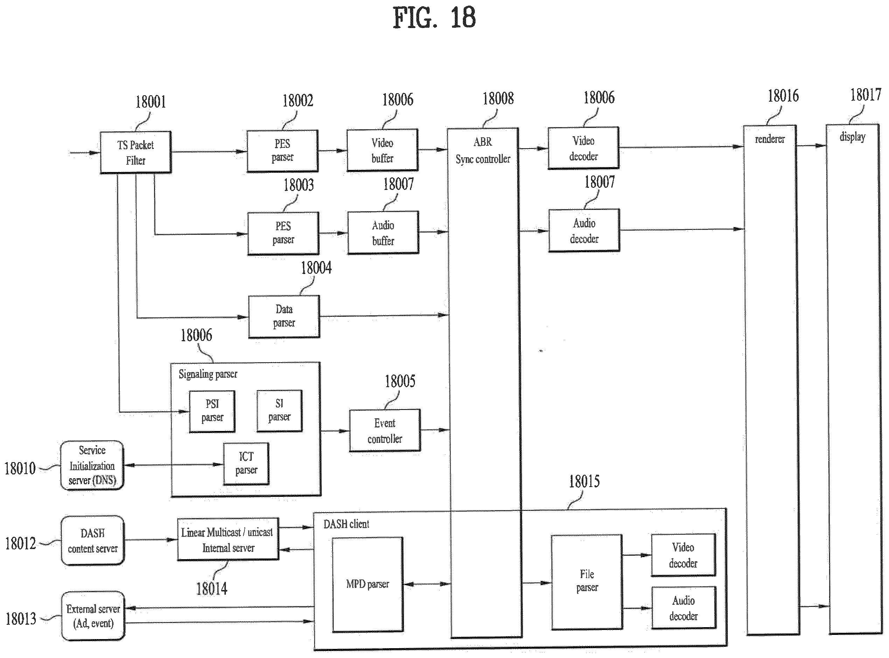

FIG. 18 illustrates a configuration of a broadcast signal reception apparatus according to embodiments of the present disclosure.

The broadcast signal reception apparatus of FIG. 18 corresponds to the broadcast signal reception apparatus of FIG. 5 and further includes some elements.

A TS packet filter receives a TS packet included in a broadcast signal. The TS packet filter transmits a packetized elementary stream (PES), data, and signaling information included in the TS packet to a PES parser, a data parser, and a signaling parser, respectively.

The signaling parser parses PSI and SI included in the signaling information. In addition, the signaling parser parses an ICT from a service initialization server (SDN).

The broadcast signal transmission apparatus may provide the same content of various qualities on the same channel over two networks. DVB SI and PSI include initialization information and the broadcast signal reception apparatus performs service discovery. Specifically, the broadcast signal reception apparatus recognizes services for each network and an event controller 18005 may process a parsing process of the reception apparatus in the form of adaptive bitrate streaming (ABR) using linkage information of two services. Based on streams including multiple DASH representations and TSs, selective content playback may be supported according to a network state and capability of a terminal. An ABR synchronization controller may request/process a supported stream so as to support more adaptive playback.

An event controller 18005 processes an event control process based on linkage information obtained from the PSI, SI, and/or ICT.

The event controller links streams transmitted over different networks. A linkage descriptor and extended_event_linkage_info() are extended to support a video of 8K resolution as well as video of UHD resolution. In addition, linkage information corresponding to a specific PID in an ES_info loop defining program map table (PMT) elementary stream information is newly defined.

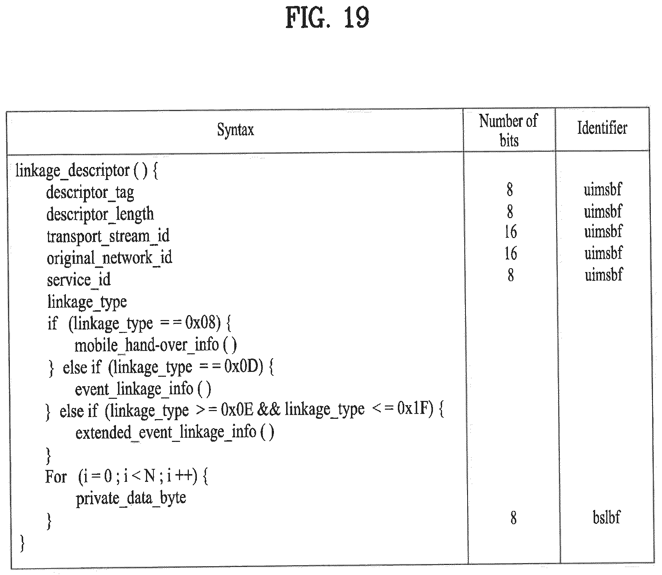

FIG. 19 illustrates a linkage descriptor.

DVB SI includes information that links additional information to a received service. The linkage descriptor provides a location and additional information related to linkage information.
transport stream_id indicates a TS including information representing a service.
original_network_id indicates a network ID of an originating delivery system of information representing a service.
service_id indicates a service in a TS. service_id may have the same value as program_number in corresponding program_map section. When the value of a linkage_type field is 0x04, service_id is irrelevant and is set to a value of 0x0000.
linkage-type indicates the type of linkage. linkage_type may include an information service, an EPG service, a TS with complete network/bouquet SI, a service replacement service, a data broadcast service, an RCS map, mobile handover, a system software update service, a TS with an SSU BAT or NIT, event linkage, extended event linkage, etc.

The linkage descriptor may be included in a loop in an SDT or EIT. The linkage descriptor includes linkage related information. The linkage descriptor signals a current service or event based on target_transport_stream_id, original_network_id, and/or service_id information and defines specific linkage information using the linkage-type value.

A service handed over by a mobile receiver may be indicated using mobile_hand-over_info().

Two events may be signaled using event_linkage_info(). Linked events may be simulcast or offset in time. A target event with high quality may be signaled using event_linkage_info(). event_linkage_info() may include target event_id, target_listed, and/or event_simulcast.
target event_id indicates an ID of a target event. The target event means an event delivered by a service represented based on original_network_id, transport_stream_id, and service_id.
target_listed indicates whether a service represented based on original_network_id, transport_stream_id, and/or service_id is included in the SDT of the TS.
event_simulcast indicates whether the target event and a source event are simulcast.

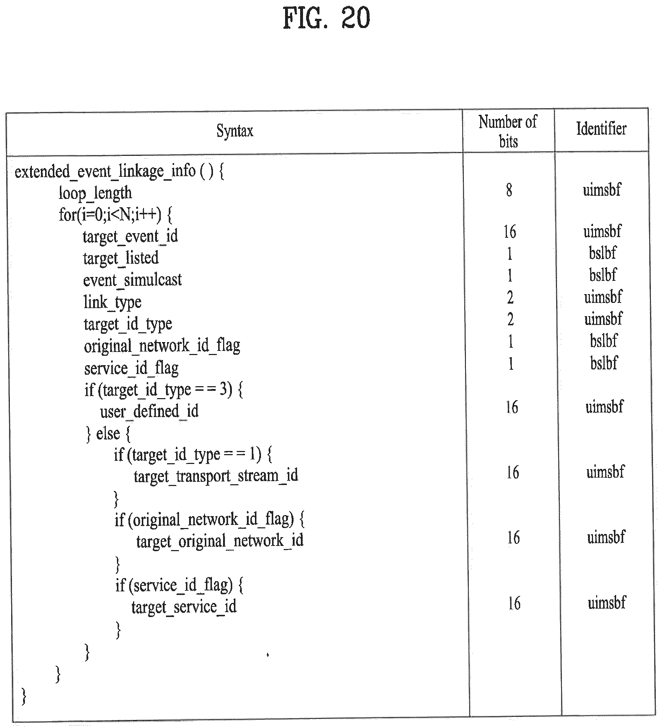

FIG. 20 illustrates extended event linkage.

When linkage-type of the linkage descriptor has a specific value, extended_event_linkage_info() may be defined.
loop_length indicates the length or size of a loop.
target_event_id indicates event_id of a target event. The target event means an event delivered on a service represented based on original_network_id, transport_stream_id, and/or service_id.
target_listed indicates whether a service represented based on original_network_id, transport_stream_id, and/or service_id is included in the SDT. If target_listed has a specific value, the service is included in the SDT.
event_simulcast indicates whether the target event and a source event are simulcast. If event_simulcast has different values, the events have offsets in time order.
link_type represents the type of the target service. The type of the target service includes standard definition (SD), HD, H.264, UHD, service compatible plano-stereoscopic multiview video coding (MVC), and/or service frame compatible plano-stereoscopic according to a combination of link_type and linkage_type,
target_id_type indicates a target service. Depending on the value of target_id_type, transport_stream_id may be used to indicate a single target service, target_transport_stream_id may be used to indicate a single target service, target_id_type may indicate that target services are present in one or more TSs, or target_id_type may indicate that target services are matched using a user-defined identifier.
original_network_id_flag indicates whether target_ original _network_id is used to determine the target service.
service_id_flag indicates whether target_service_id is used to determine the target service.
user defined_id indicates whether the linkage descriptor is within the range of a private data specifier descriptor. Therefore, a receiver may determine the meaning of user_defined_id.
target transport stream_id indicates an alternate TS including an information service represented by target_id_type, original_network_id flag, and/or service_id_flag.
target original_network_id specifies a label indicating network_id of a delivery system of an information service represented by target_id_type, original_network_id_flag, and/or service_id_flag.
target service_id represents the information service represented by target_id_type, original_network_id flag, and/or service_id_flag.

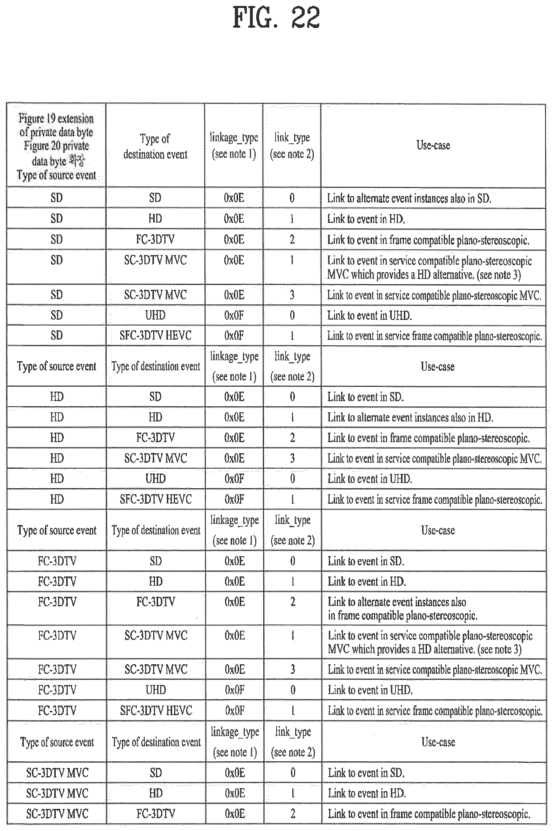

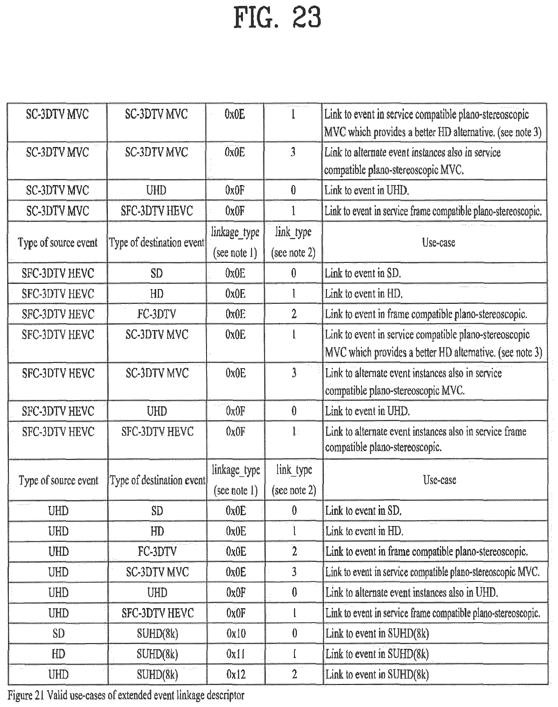

The extended_event_linkage_info() loop may define specific event_id, which is a target, and may signal whether an event is simulcast. A target service type may be signaled as illustrated in FIGS. 22 and 23 by a combination of the Link_type field and the linkage_type value. The broadcast signal reception apparatus according to embodiments of the present disclosure is intended to extend linkage information of 8k (SUHD) to enable an adaptive service between DVB-I and traditional DVB networks.

Accordingly, the controller of the broadcast signal reception apparatus may acquire a linkage relationship between content or streams for different networks based on the signaling information of FIGS. 19 and 20. The decoder (or renderer) of the broadcast signal reception apparatus may dynamically switch between content and streams of different networks allocated to one channel to provide high quality content to the user.

DVB-I is MPEG-DASH/DVB-DASH-based transmission and does not correspond to information defined in the MPEG-2 system of traditional DVB. Therefore, private_data_byte (or private data specifier descriptor) included in the linkage descriptor of FIG. 19 is extended as follows.

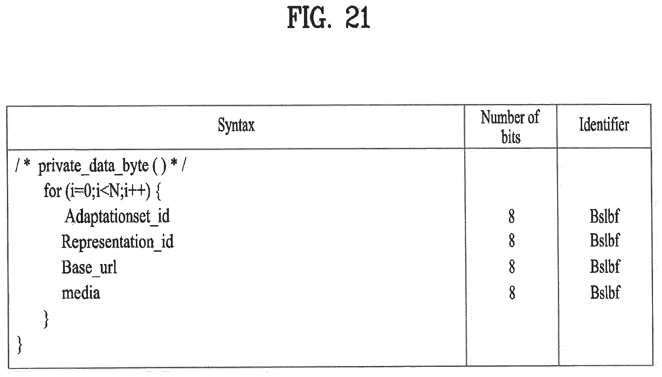

FIG. 21 illustrates private_data_byte.

The linkage descriptor of FIG. 19 includes private_data_byte. private_data_byte includes the following information.

Adaptationset_id indicates an ID of an adaptation set for content of MPEG-DASH.
representation_id indicates an ID of representation for content of MPEG-DASH.

Base_url indicates a URL of a component and/or segment for DVB-I content.
media indicates a URL of the component and/or segment for DVB-I content.

Adaptationset_id and representation_id represent hierarchical ID information for content defined in an MPD of MPEG-DASH and component and representation information may be represented based on this ID information. To check information of a specific segment of representation, the base URI and media in a segment template are used. That is, the base URI and media may indicate a URI of a component and a segment of DVB-I corresponding to a currently received DVB network. Through private_data_byte, a segment of a specific representation represented as transport stream_id, original_network_id, and/or service_id corresponding to a target may be signaled.

Accordingly, the broadcast signal reception apparatus or the signaling parser according to embodiments of the present disclosure parses information included in private_data_byte. Based on the Adaptationset_id and representation_id, the controller or decoder may identify an adaptation or representation included in a media stream and, based on Base_url and media, the controller or the decoder may obtain a component or segment included in the media stream. In other words, content included in a stream of the DVB-I network may be hierarchically identified and acquired.

FIGS. 22 and 23 illustrate a use case of an extended event linkage descriptor.

linkage-type included in the linkage descriptor of FIG. 19 extends the linkage descriptor to provide extended_event_linkage_info() of FIG. 20 and extended_event_linkage_info() provides an adaptive service between DVB-I and traditional DVB networks using link_type.

Depending on a combination of linkage-type and link_type, the extended event linkage descriptor may signal the case in which a source event type is SD and a destination event type is SUHD (8k), the case in which the source event type is HD and the destination event type is SUHD (8k), and/or the case in which the source event type is UHD and the destination event type is SUHD (8k).

Accordingly, the broadcast signal transmission apparatus and the broadcast signal reception apparatus according to embodiments of the present disclosure may provide an adaptive service between the DVB-I and traditional DVB networks.

The broadcast signal transmission apparatus and the broadcast signal reception apparatus according to embodiments of the present disclosure provide SUHD (8k) linkage through a DVB-I channel based on an SD, UD, and/or UHD linkage service provided through channels.

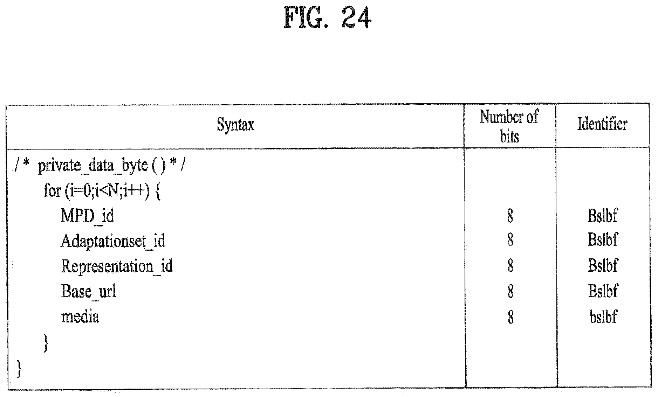

FIG. 24 illustrates private_data_byte.
private_data_byte of FIG. 24 illustrates an embodiment in which private_data_byte of FIG. 21 is extended. private_data_byte further includes MPD_id.

MPD_id represents information for identifying an MPD included in MPEG-DASH. The broadcast signal reception apparatus acquires the MPD based on MPD_id, obtains media content component(s) for content defined in the MPD based on Adaptationset_id, and obtains a representation corresponding to media stream(s) based on Representation_id. Base_url indicates information related to a URI of a specific segment included in the representation and media indicates an attribute of media included in a segment template. The broadcast signal reception apparatus may signal a segment of a specific representation in transport_stream_id, original_network_id, and/or service_id corresponding to a target based on private_data_byte.

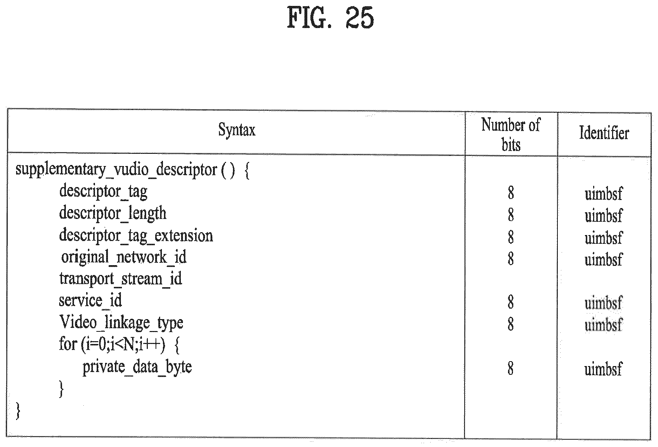

FIG. 25 illustrates supplementary_video_descriptor.

An SI descriptor includes an EIT. The EIT includes an extended event linkage descriptor. Although the extended event linkage descriptor provides a TSID, the extended event linkage descriptor may not perform signaling capable of accessing up to a specific segment included in DASH. Since the TSID is an ID of a TS of a delivery stream in which components of audio, video, and/or subtitles are multiplexed, additional signaling information may be required for the TSID in terms of linkage information.

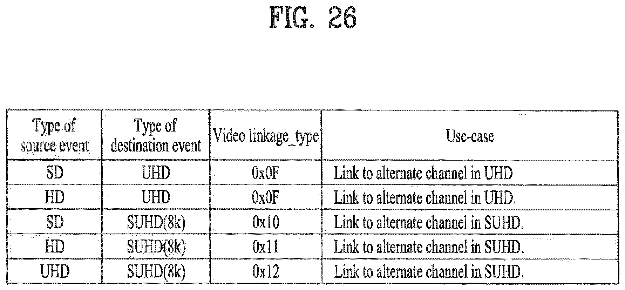

The following method newly proposes linkage information corresponding to a specific PID in an ES_info loop that defines PMT elementary stream information.
supplementary_video_descriptor includes the following information.
multi_stream_info_present indicates whether a currently received additional video stream is present.
original_network_id indicates an ID of a network type transmitting additional video. Specifically, original_network id may identify a DVB-C/T/S network or indicate an ID of a transmission network operator.
transport stream_id indicates an ID of a TS through which additional video is being transmitted.
video_linkage_type indicates a linkage type available for additional video and enables an alternative service or an ABR service in the form illustrated in FIG. 26.
private_data_byte has been described above in FIG. 24.

FIG. 26 illustrates linkage for an alternate service.

According to the video_linkage_type included in supplementary_video_descriptor of FIG. 25, if a source event is SD, a destination event may signal a link for an alternate channel for UHD; if the source event is HD, the destination event may signal a link for an alternate channel for UHD; if the source event is SD, the destination event may signal a link for an alternate channel for SUHD (8k); if the source event is HD, the destination event may signal a link for an the alternate channel for SUHD (8k); and if the source event is UHD, the destination event may signal a link for an alternate channel for SUHD (8k).

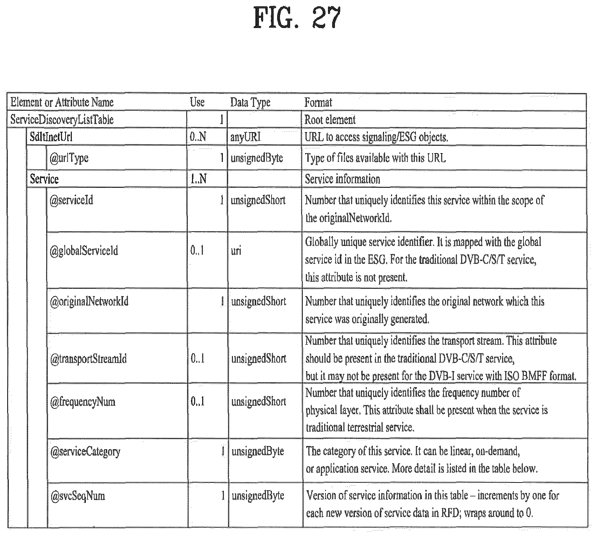

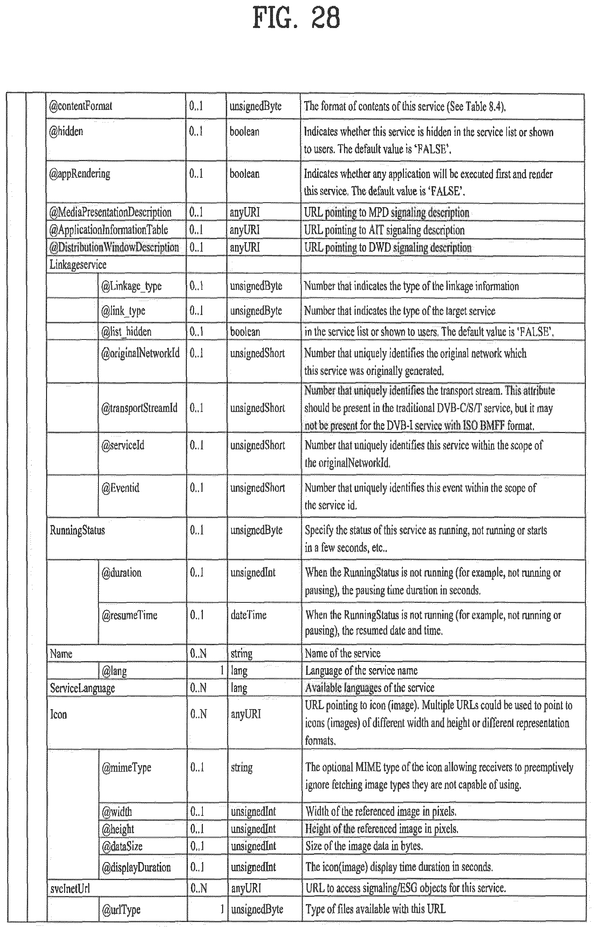

FIGS. 27 and 28 illustrate serviceDiscoveryListTable.

The broadcast signal transmission apparatus and the broadcast signal reception apparatus according to embodiments of the present disclosure provide an ABR service between an Internet linear channel and a traditional DVB channel. Linkage service information is added by extending an existing MPEG-2 system and a DVB SI service channel list configuration method. DVB-I may perform service discovery for the IP linear channel, provide UX similar to a DVB channel service through a channel list for DVB-I together with a TV channel list, and include independent service channels. The channel over the Internet may also provide a linkage service with a traditional DVB network through service-related initialization information.

A service discovery list table or serviceDiscoveryListTable (SDLT) supports DVB-I. SDLT may be included in an ICT. The SDLT includes information for the linkage service.
@serviceid identifies a service within the scope of originalnetworkid.
@globalserviceid indicates a global service ID and is mapped to a global service ID in an ESG. For a traditional DVB-C/S/T service, this attribute may not be present.
@originalNetworkid identifies an original network from which the service is originally generated.
@transportStreamId identifies a TS. This attribute is present for the traditional DVB-C/S/T service and may not be present for a DVB-I service with an ISO base media file format (BMFF).
@frequencyNum indicates a service information version of this table.
@contentFormat represents a content format of a service.
@hidden indicates whether a service is hidden in a service list or is visible to users.
@appRendering indicates whether an application is executed.
@MediaPresentationDescription indicates a URL for an MPD signaling description.
@ApplicationInformationTable indicates a URL for an AIT signaling description.
@DistributionWindowDescription indicates a URL for a distribution window description (DWD) signaling description.
@Linkage_type indicates a type value of a linkage service with a higher service received through DVB-I. The value of @Linkage_type may have an attribute equivalent to linkage_type in URI_linkage descriptor of DVB SI and provide a scenario equivalent to a channel list linkage service.
@link_type corresponds to the value of link_type, which is a lower element of extended_event_linkage_info() in URI_linkage descriptor, and the value of @link_type may identify a supported ABR bit stream through the linkage service. @Linkage_type and @link_type provide a service by identifying a video attribute of a supported bit stream as described in FIG. 18.
@originalNetworkId identifies an original network from which a service is originally generated.
@transportStreamId identifies a TS. This attribute may be present for the traditional DVB-C/S/T service and may not be present for the DVB-I service with an ISO BMFF.
@serviceId identifies a service within the scope of originalnetworkid.
@Eventid identifies an event within the scope of a service ID.

In other words, @originalNetworkId, @transportStreamId, @serviceId, (DVB triplet), @Eventid, and/or @globalserviceid (unique service name) may provide ID of a unique service channel. Using the above-described information, the broadcast signal transmission apparatus and the broadcast signal reception apparatus according to embodiments of the present disclosure may provide the DVB-I service provided based on standards for each region or/and each country and uniquely identify the DVB-I service. In addition, using the above-described information, the broadcast signal transmission apparatus and the broadcast signal reception apparatus according to embodiments of the present disclosure may provide the DVB-I channel and the traditional DVB channels in a simulcast manner on the same channel and dynamically switch between SD, HD, UHD, and SUHD (8k) of video resolution corresponding to a program on the same logical channel within a specific time according to a network situation.

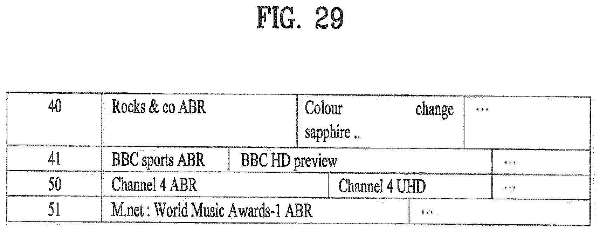

FIG. 29 illustrates UI/UX for dynamic content switching based on linkage information.

For channel 40, the broadcast signal reception apparatus may dynamically switch between a program (Rocks & co) for which ABR is supported and a program for which color is changeable in consideration of a network situation.

For channel 41, the broadcast signal reception apparatus may dynamically switch between a program (BBC sports) for which ABR is supported and a program (BBC) for which HD preview is supported.

For channel 50, the broadcast signal reception apparatus may dynamically switch between a program (channel 4) for which ABR is supported and a program (channel 4) for UHD.

For channel 51, the broadcast signal reception apparatus may dynamically switch between a program (M.net) for which ABR is supported and another program.

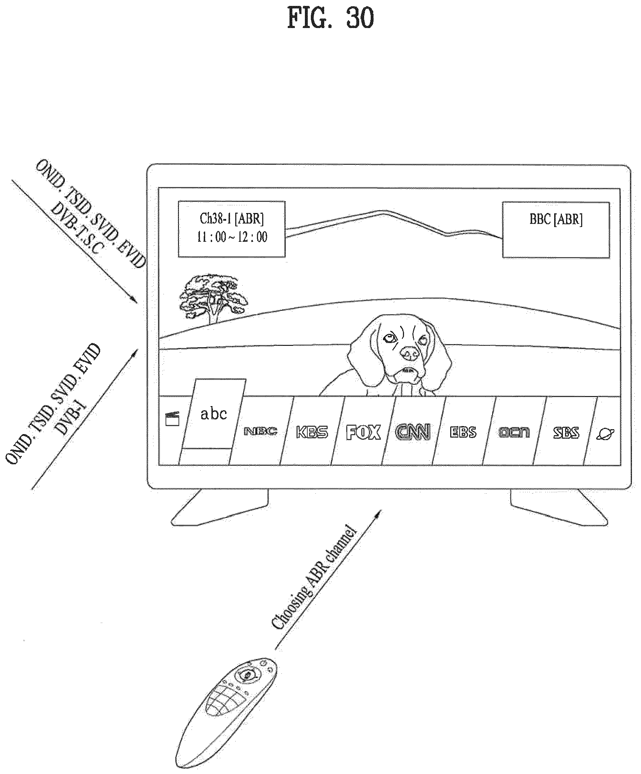

FIG. 30 illustrates UI/UX of an ABR stream linkage service for supporting dynamic resolution.

The broadcast signal reception apparatus according to embodiments of the present disclosure receives content through a DVB-T/S/C channel based on SI such as an ONID, a TSID, a service ID (SVID), and/or an event ID (EVID) as described above. In addition, the broadcast signal reception apparatus receives content through a DVB-I channel based on SI such as the ONID, the TSID, and/or the EVID.

The broadcast signal reception apparatus or the display unit of the broadcast signal reception apparatus provides UI/UX so that a user may select a channel and check a TV channel banner on a screen of a TV terminal. The TV channel banner or channel information displays a channel number (ch-x), an activation time, and information [ABR] indicating that an adaptive video service may be provided. Specifically, channel number 38-1, time 11:30 to 13:00, and information [ABR] are displayed. Content information about the DVB-T/S/C channel and the DVB-I channel may be displayed in an area on the screen. The user may select an ABR channel. Accordingly, the broadcast signal reception apparatus may provide the user with content of the best quality or the best resolution among content of the DVB-T/S/C channel and the DVB-I channel in consideration of a network situation and a receiver.

If the banner disappears from the screen, the broadcast signal reception apparatus or the display unit of the broadcast signal reception apparatus displays information indicating that video and an adaptive video service of a channel broadcaster are being provided

The display unit may provide integrated UI/UX on the screen. The display unit may integrate the DVB network and the Internet channel so as to be provided on the same channel and the user may receive various resolutions and content.

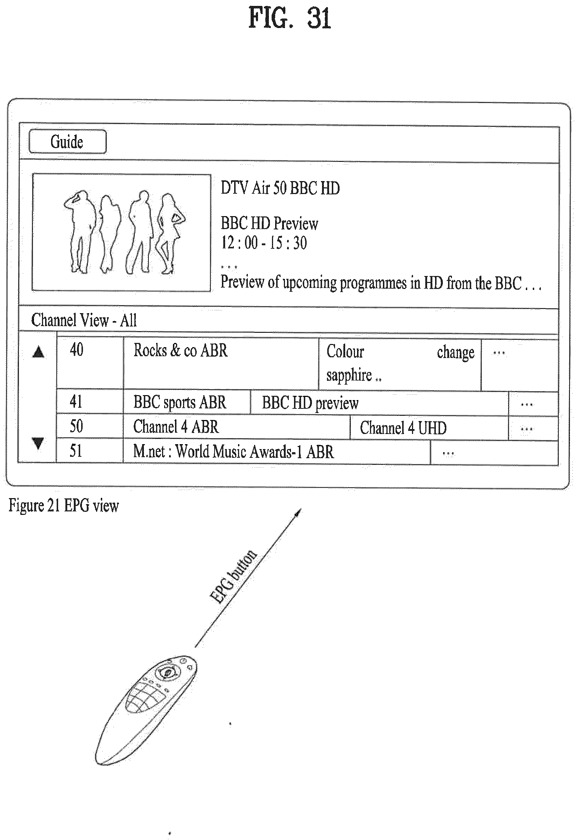

FIG. 31 illustrates EPG UI/UX.

In response to a user input signal for EPG information, the broadcast signal reception apparatus and the display unit according to embodiments of the present disclosure display information such as an ESG (or EPG) on a screen. The display unit may display, on the screen, display information about a program of each channel, which is in progress, or a scheduled program. In this case, video quality that may be processed or a title of resolution may be displayed. In addition, the display unit may provide information to a user by displaying, in the form of UI/UX, on the screen, ABR indicating that a specific program may be provided with an adaptive video according to a network or capability of a terminal.

Furthermore, the broadcast signal transmission apparatus and the broadcast signal reception apparatus according to embodiments of the present disclosure may dynamically provide a DVB-I service.

Specifically, the display unit may display a result of receiving the DVB-T/S/C channel and the DVB-I channel through one logical channel. The display unit may display an ESG into which information about content received from these different/various networks such as the DVB-T/S/C channel and the DVB-I channel is integrated on one logical channel. The display unit may display time information, channel information, content information, and/or ABR information indicating that dynamic switching may be performed. The user may select desired content or a desired service based on an external input device or a user input signal..

The display unit may display the ESG information on a separate area from content on the screen or display the ESG information by overlapping with content. The display unit may variously display the above-described ESG as in FIGS. 29 to 31.

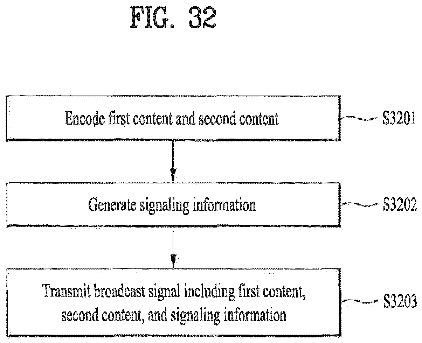

FIG. 32 illustrates a broadcast signal transmission method according to embodiments of the present disclosure.

The broadcast signal transmission method according to embodiments of the present disclosure includes encoding first content and second content (S3201), generating signaling information (S3202), transmitting a broadcast signal including the first content, the second content, and the signaling information (S3203).

The broadcast signal transmission method may be performed by the broadcast signal transmission apparatus of FIG. 1. An encoder (bit interleaved coding & modulation block) of the broadcast signal transmission apparatus may encode content of networks. A generator (signaling generation block of the broadcast signal transmission apparatus may generate signaling information for the content. The generator may generate the signaling information for service discovery described above with reference to FIGS. 6 to 17. In addition, the generator may generate the signaling information for linkage and dynamic switching between various content of various networks described above with reference to FIGS. 19 to 23. The generator may also generate the signaling information for UI/UX described above with reference to FIGS. 29 to 31. A frame builder (frame building block) of the broadcast signal transmission apparatus may generate a broadcast signal including the content and the signaling information. A modulator ( OFDM generation block) of the broadcast signal transmission apparatus may modulate the broadcast signal based on an OFDM scheme and a transmitter of the broadcast signal transmission apparatus may transmit the broadcast signal. The transmitter of the broadcast signal transmission apparatus may transmit a stream for a T/S/C channel based on a network for the T/S/C channel and a stream for an I channel based on a network for the I channel.

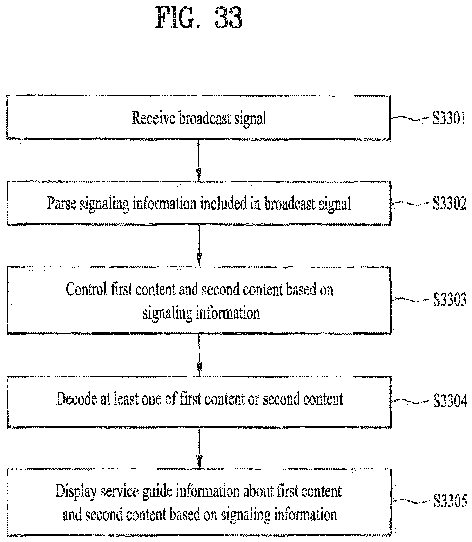

FIG. 33 illustrates a broadcast signal reception method according to embodiments of the present disclosure.

The broadcast signal reception method according to embodiments of the present disclosure includes receiving a broadcast signal (S3301), parsing signaling information included in the broadcast signal (S3302), controlling first content and second content based on the signaling information (S3303), and decoding at least one of the first content or the second content (S3304). The method may further include displaying service guide information about the first content and the second content based on the signaling information (S3305).

The broadcast signal reception method may be performed by the broadcast signal reception apparatus of FIG. 2 ). Specifically, a tuner receives a broadcast signal and the packet receiving unit 50001 (TS packet filter) may parse a packet. The signaling parser 50005 may parse signaling information included in the broadcast signal. The DASH controller 50014 (DASH client) may parse content of a DASH file format included in the broadcast signal. The display 50016 may display content and service guide information, included in the broadcast signal, based on the signaling information. In addition, the signaling parser 50005 may perform service discovery based on the signaling information described with reference to FIGS. 6 to 17. The controller 18005 of the broadcast signal reception apparatus may support a linkage operation between stream data of various networks according to FIG. 17 based on the signaling information of FIGS. 19 to 23. In addition, the display 50016 may provide the service guide information to the user in the form of UI/UX as illustrated in FIGS. 29 to 31 based on the signaling information of FIGS. 24 to 28.

In this document, "/" and "," should be interpreted to indicate and/or. For instance, the expression A/B may mean A and/or B. Further, A, B may mean A and/or B. Further, A/B/C may mean at least one of A, B, and/or C.

Further, in the document, the term "or" should be interpreted to indicate and/or. For instance, the expression A or B may comprise 1) only A, 2) only B, and/or 3) both A and B. In other words, the term "or" in this document should be interpreted to indicate additionally or alternatively.

In this specification, the modules or units may be processors that execute consecutive processes stored in a memory (or a storage unit). The steps described in the above-described embodiments may be performed by hardware, software, and/or processors. The modules/blocks/units described in the above-described embodiments may operate as hardware, software, and/or processors. The methods proposed by the present disclosure may be executed as code. This code may be written in a processor-readable storage medium and thus may be read by a processor provided by an apparatus.

Although a description has been given with reference to each of the accompanying drawings for clarity, it is possible to design new embodiments by integrating the embodiments shown in the accompanying drawings with each other. In addition, if a recording medium readable by a computer, in which programs for executing the embodiments mentioned in the foregoing description are recorded, is designed, if necessary, by those skilled in the art, this may be within the scope of the present disclosure.

The apparatuses and methods according to the present disclosure are not limited by the configurations and methods of the embodiments given in the foregoing description. In addition, the embodiments given in the foregoing description may be configured in a manner of being selectively combined with one another entirely or in part to enable various modifications.

The methods proposed by the present disclosure may be implemented as processor-readable code in a processor-readable recording medium provided to a network device. The processor-readable medium may include all kinds of recording devices capable of storing data readable by a processor. The processor-readable medium may include one of a ROM, a RAM, a CD-ROM, a magnetic tape, a floppy disk, an optical data storage device, and the like and also include carrier-wave type implementation such as transmission over the Internet. The processor-readable recording medium may be distributed to a computer system connected via a network and processor-readable code may be stored and executed in a distributed manner.

Both apparatus and method disclosures are mentioned in this specification and descriptions of both of the apparatus and method disclosures may be complementarily applied to each other as needed.

Both an apparatus and a method are mentioned in this specification and descriptions of both the apparatus and the method may be complementarily applied to each other.

### Mode for Disclosure

Various embodiments have been described in the best mode for carrying out the disclosure.

### Industrial Applicability

The present disclosure is available in broadcast signal provision fields.

## Claims

1. An apparatus for receiving a broadcast signal, the apparatus comprising:
a receiver configured to receive a broadcast signal including a first service based on a broadcast channel including a cable channel, a terrestrial channel and a satellite channel, and a second service based on a broadband channel of an Internet channel;
a signaling parser (50005) configured to parse signaling information in the broadcast signal, wherein the signaling information includes linkage information (90005, 90008), the linkage information includes type information, wherein:
- a first value of the type information represents a route for discovering a service list for the second service for the Internet channel in the broadcast channel, and
- a second value of the type information represents a route for discovering a service list for the second service for the Internet channel in the broadband channel; and
a displayer (50016) configured to display service guide information for the first service and the second service based on the signaling information,
wherein the signaling information is carried in a Network Information Table, NIT, (90003) or a Bouquet Association Table, BAT, (90011) in the broadcast signal,
wherein the linkage information is a Uniform Resource Indicator, URI, linkage descriptor comprising a private data byte (90006, 90009), and
wherein the private data byte comprises an instance transport ID, TSID, indicating a temporary TSID to replace a TSID required for data for the Internet channel.

2. The apparatus of claim 1,
wherein the signaling information includes a transport stream identifier for the first service.

3. The apparatus of claim 1,
wherein the linkage information further includes extended linkage information, the extended linkage information includes at least one of link information for SD and SUHD, link information for HD and SUHD, or link information for UHD and SUHD.

4. A method for receiving a broadcast signal, the apparatus comprising:
receiving (S3301) a broadcast signal including a first service based on a broadcast channel including a cable channel, a terrestrial channel and a satellite channel, and a second service based on a broadband channel of an Internet channel
parsing (S3302) signaling information in the broadcast signal, wherein the signaling information includes linkage information, the linkage information includes type information, wherein:
- a first value of the type information represents a route for discovering a service list for the second service for the Internet channel in the broadcast channel, and
- a second value of the type information represents a route for discovering a service list for the second service for the Internet channel in the broadband channel; and
displaying (S3305) service guide information for the first service and the second service based on the signaling information,
wherein the signaling information is carried in a Network Information Table, NIT, (90003) or a Bouquet Association Table, BAT, (90011) in the broadcast signal,
wherein the linkage information is a Uniform Resource Indicator, URI, linkage descriptor comprising a private data byte (90006, 90009), and
wherein the private data byte comprises an instance transport ID, TSID, indicating a temporary TSID to replace a TSID required for data for the Internet channel.

5. The method of claim 4,
wherein the signaling information includes a transport stream identifier for the first service.

6. The method of claim 4,
wherein the linkage information further includes extended linkage information, the extended linkage information includes at least one of link information for SD and SUHD, link information for HD and SUHD, or link information for UHD and SUHD.

7. A method for transmitting a broadcast signal, the method comprising:
generating (S3202) a broadcast signal including a first service,
transmitting (S3203) the broadcast signal based on a broadcast channel including a cable channel, a terrestrial channel and a satellite channel;
generating a second service; and
transmitting the second service based on a broadband channel of an Internet channel,
wherein signaling information in the broadcast signal includes linkage information, the linkage information includes type information, wherein:
- a first value of the type information represents a route for discovering a service list for the second service for the Internet channel in the broadcast channel, and
- a second value of the type information represents a route for discovering a service list for the second service for the Internet channel in the broadband channel,
wherein the signaling information is carried in a Network Information Table, NIT, (90003) or a Bouquet Association Table, BAT, (90011) in the broadcast signal,
wherein the linkage information is a Uniform Resource Indicator, URI, linkage descriptor comprising a private data byte (90006, 90009), and
wherein the private data byte comprises an instance transport ID, TSID, indicating a temporary TSID to replace a TSID required for data for the Internet channel.

8. The method of claim 7,
wherein the signaling information includes a transport stream identifier for the first service.

9. The method of claim 7,
wherein the linkage information further includes extended linkage information, the extended linkage information includes at least one of link information for SD and SUHD, link information for HD and SUHD, or link information for UHD and SUHD.

10. An apparatus for transmitting a broadcast signal, the apparatus comprising:
a generator configured to generate a broadcast signal including a first service;
a transmitter configured to transmit the broadcast signal based on a broadcast channel including a cable channel, a terrestrial channel and a satellite channel;
the generator being further configured to generate a second service; and
the transmitter being further configured to transmit the second service based on a broadband channel of an Internet channel,
wherein signaling information in the broadcast signal includes linkage information, the linkage information includes type information, wherein:
- a first value of the type information represents a route for discovering a service list for the second service for the Internet channel in the broadcast channel, and
- a second value of the type information represents a route for discovering a service list for the second service for the Internet channel in the broadband channel,
wherein the signaling information is carried in a Network Information Table, NIT, (90003) or a Bouquet Association Table, BAT, (90011) in the broadcast signal,
wherein the linkage information is a Uniform Resource Indicator, URI, linkage descriptor comprising a private data byte (90006, 90009), and
wherein the private data byte comprises an instance transport ID, TSID, indicating a temporary TSID to replace a TSID required for data for the Internet channel.

11. The apparatus of claim 10,
wherein the signaling information includes a transport stream identifier for the first service.

12. The apparatus of claim 10,
wherein the linkage information further includes extended linkage information, the extended linkage information includes at least one of link information for SD and SUHD, link information for HD and SUHD, or link information for UHD and SUHD.

## Patentansprüche

1. Vorrichtung zum Empfangen eines Rundfunksignals, wobei die Vorrichtung umfasst:
einen Empfänger, der so konfiguriert ist, dass er ein Rundfunksignal empfängt, das einen ersten Dienst auf der Grundlage eines Rundfunkkanals einschließlich eines Kabelkanals, eines terrestrischen Kanals und eines Satellitenkanals sowie einen zweiten Dienst auf der Grundlage eines Breitbandkanals eines Internetkanals umfasst;
einen Signalisierungsparser (50005), der so konfiguriert ist, dass er Signalisierungsinformationen in dem Rundfunksignal analysiert, wobei die Signalisierungsinformationen Verknüpfungsinformationen (90005, 90008) enthalten, wobei die Verknüpfungsinformationen Typinformationen enthalten, wobei:
- ein erster Wert der Typinformationen eine Route zum Auffinden einer Diensteliste für den zweiten Dienst für den Internetkanal in dem Rundfunkkanal darstellt, und
- ein zweiter Wert der Typinformationen eine Route zum Auffinden einer Diensteliste für den zweiten Dienst für den Internetkanal in dem Breitbandkanal darstellt; und
ein Anzeigegerät (50016), das so konfiguriert ist, dass es Dienstführungsinformationen für den ersten Dienst und den zweiten Dienst basierend auf den Signalisierungsinformationen anzeigt,
wobei die Signalisierungsinformation in einer Netzinformationstabelle, NIT, (90003) oder einer Bouquet-Assoziationstabelle, BAT, (90011) in dem Rundfunksignal enthalten ist,
wobei die Verknüpfungsinformation ein Uniform Resource Indicator, URI, Verknüpfungsdeskriptor ist, der ein privates Datenbyte (90006, 90009) umfasst, und
wobei das private Datenbyte eine Instanz-Transport-ID, TSID, umfasst, die eine temporäre TSID angibt, um eine TSID zu ersetzen, die für Daten für den Internetkanal erforderlich ist.

2. Vorrichtung nach Anspruch 1,
wobei die Signalisierungsinformationen einen Transportstrom-Identifikator für den ersten Dienst enthalten.

3. Vorrichtung nach Anspruch 1,
wobei die Verknüpfungsinformationen ferner erweiterte Verknüpfungsinformationen enthalten, wobei die erweiterten Verknüpfungsinformationen mindestens eines von Verknüpfungsinformationen für SD und SUHD, Verknüpfungsinformationen für HD und SUHD oder Verknüpfungsinformationen für UHD und SUHD enthalten.

4. Verfahren zum Empfang eines Rundfunksignals, wobei die Vorrichtung umfasst:
Empfangen (S3301) eines Rundfunksignals mit einem ersten Dienst auf der Grundlage eines Rundfunkkanals, der einen Kabelkanal, einen terrestrischen Kanal und einen Satellitenkanal umfasst, und einem zweiten Dienst auf der Grundlage eines Breitbandkanals eines Internetkanals
Parsen (S3302) von Signalisierungsinformationen in dem Rundfunksignal, wobei die Signalisierungsinformationen Verknüpfungsinformationen enthalten und die Verknüpfungsinformationen Typinformationen enthalten, wobei:
- ein erster Wert der Typinformationen eine Route zum Auffinden einer Diensteliste für den zweiten Dienst für den Internetkanal im Rundfunkkanal darstellt, und
- ein zweiter Wert der Typinformationen eine Route zum Auffinden einer Diensteliste für den zweiten Dienst für den Internetkanal im Breitbandkanal darstellt; und
Anzeigen (S3305) von Dienstführungsinformationen für den ersten Dienst und den zweiten Dienst auf der Grundlage der Signalisierungsinformationen,
wobei die Signalisierungsinformation in einer Netzinformationstabelle, NIT, (90003) oder einer Bouquet-Assoziationstabelle, BAT, (90011) in dem Rundfunksignal enthalten ist,
wobei die Verknüpfungsinformation ein Uniform Resource Indicator, URI, Verknüpfungsdeskriptor ist, der ein privates Datenbyte (90006, 90009) umfasst, und
wobei das private Datenbyte eine Instanz-Transport-ID, TSID, umfasst, die eine temporäre TSID angibt, um eine TSID zu ersetzen, die für Daten für den Internetkanal erforderlich ist.

5. Verfahren nach Anspruch 4,
wobei die Signalisierungsinformationen einen Transportstrom-Identifikator für den ersten Dienst enthalten.

6. Verfahren nach Anspruch 4,
wobei die Verknüpfungsinformationen ferner erweiterte Verknüpfungsinformationen enthalten, wobei die erweiterten Verknüpfungsinformationen mindestens eines von Verknüpfungsinformationen für SD und SUHD, Verknüpfungsinformationen für HD und SUHD oder Verknüpfungsinformationen für UHD und SUHD enthalten.

7. Verfahren zum Übertragen eines Rundfunksignals, wobei das Verfahren umfasst:
Erzeugen (S3202) eines Rundfunksignals, das einen ersten Dienst enthält,
Übertragen (S3203) des Rundfunksignals auf der Grundlage eines Rundfunkkanals, der einen Kabelkanal, einen terrestrischen Kanal und einen Satellitenkanal umfasst;
Erzeug eines zweiten Dienstes; und
Übertragen des zweiten Dienstes auf der Grundlage eines Breitbandkanals eines Internetkanals,
wobei Signalisierungsinformationen in dem Rundfunksignal Verknüpfungsinformationen enthalten, wobei die Verknüpfungsinformationen Typinformationen enthalten, wobei:
- ein erster Wert der Typinformationen eine Route zum Auffinden einer Diensteliste für den zweiten Dienst für den Internetkanal im Rundfunkkanal darstellt, und
- ein zweiter Wert der Typinformationen eine Route zum Auffinden einer Diensteliste für den zweiten Dienst für den Internetkanal im Breitbandkanal darstellt,
wobei die Signalisierungsinformation in einer Netzinformationstabelle, NIT, (90003) oder einer Bouquet-Assoziationstabelle, BAT, (90011) im Rundfunksignal enthalten ist,
wobei die Verknüpfungsinformation ein Uniform Resource Indicator, URI, Verknüpfungsdeskriptor ist, der ein privates Datenbyte (90006, 90009) umfasst, und
wobei das private Datenbyte eine Instanz-Transport-ID, TSID, umfasst, die eine temporäre TSID angibt, um eine TSID zu ersetzen, die für Daten für den Internetkanal erforderlich ist.

8. Verfahren nach Anspruch 7,
wobei die Signalisierungsinformationen einen Transportstrom-Identifikator für den ersten Dienst enthalten.

9. Verfahren nach Anspruch 7,
wobei die Verknüpfungsinformationen ferner erweiterte Verknüpfungsinformationen enthalten, wobei die erweiterten Verknüpfungsinformationen mindestens eines von Verknüpfungsinformationen für SD und SUHD, Verknüpfungsinformationen für HD und SUHD oder Verknüpfungsinformationen für UHD und SUHD enthalten.

10. Vorrichtung zum Übertragen eines Rundfunksignals, wobei die Vorrichtung umfasst:
einen Generator, der so konfiguriert ist, dass er ein Rundfunksignal erzeugt, das einen ersten Dienst enthält;
einen Sender, der so konfiguriert ist, dass er das Rundfunksignal auf der Grundlage eines Rundfunkkanals einschließlich eines Kabelkanals, eines terrestrischen Kanals und eines Satellitenkanals überträgt;
wobei der Generator außerdem so konfiguriert ist, dass er einen zweiten Dienst erzeugt; und
der Sender ferner so konfiguriert ist, dass er den zweiten Dienst auf der Grundlage eines Breitbandkanals eines Internetkanals überträgt,
wobei Signalisierungsinformationen in dem Rundfunksignal Verknüpfungsinformationen enthalten, wobei die Verknüpfungsinformationen Typinformationen enthalten, wobei:
- ein erster Wert der Typinformation eine Route zum Auffinden einer Diensteliste für den zweiten Dienst für den Internetkanal im Rundfunkkanal darstellt, und
- ein zweiter Wert der Typinformation eine Route zum Auffinden einer Diensteliste für den zweiten Dienst für den Internetkanal im Breitbandkanal darstellt,
wobei die Signalisierungsinformation in einer Netzinformationstabelle, NIT, (90003) oder einer Bouquet-Assoziationstabelle, BAT, (90011) im Rundfunksignal enthalten ist,
wobei die Verknüpfungsinformation ein Uniform Resource Indicator, URI, Verknüpfungsdeskriptor ist, der ein privates Datenbyte (90006, 90009) umfasst, und
wobei das private Datenbyte eine Instanz-Transport-ID, TSID, umfasst, die eine temporäre TSID angibt, um eine TSID zu ersetzen, die für Daten für den Internetkanal erforderlich ist.

11. Vorrichtung nach Anspruch 10,
wobei die Signalisierungsinformationen einen Transportstrom-Identifikator für den ersten Dienst enthalten.

12. Vorrichtung nach Anspruch 10,
wobei die Verknüpfungsinformationen ferner erweiterte Verknüpfungsinformationen enthalten, wobei die erweiterten Verknüpfungsinformationen mindestens eines von Verknüpfungsinformationen für SD und SUHD, Verknüpfungsinformationen für HD und SUHD oder Verknüpfungsinformationen für UHD und SUHD enthalten.

## Revendications

1. Appareil destiné à recevoir un signal de diffusion, l'appareil comprenant:
un récepteur configuré pour recevoir un signal de diffusion comprenant un premier service basé sur un canal de diffusion notamment un canal par câble, un canal terrestre et un canal satellite, et un second service basé sur un canal de diffusion d'un canal Internet;
un analyseur de signalisation (50005) configuré pour analyser les informations de signalisation dans le signal de diffusion, dans lequel les informations de signalisation comprennent des informations de liaison (90005, 90008), les informations de liaison comprenant des informations de type, dans lequel:
- une première valeur des informations de type représente un itinéraire pour découvrir une liste de services pour le second service pour le canal Internet dans le canal de diffusion, et
- une seconde valeur des informations de type représente un itinéraire pour découvrir une liste de services pour le second service pour le canal Internet dans le canal de diffusion ; et
un afficheur (50016) configuré pour afficher des informations de guide de service pour le premier service et le second service en fonction des informations de signalisation,
dans lequel les informations de signalisation sont transportées dans une table d'information sur le réseau, NIT, (90003) ou une table d'association de bouquets, BAT (90011) dans le signal de diffusion,
dans lequel les informations de liaison sont un descripteur de liaison d'indicateur de ressource uniforme, URI, comprenant un octet de données privées (90006, 90009), et
dans lequel l'octet de données privées comprend un ID de transport d'instance, ID, TSID, indiquant un TSID temporaire pour remplacer un TSID requis pour les données pour le canal Internet.

2. Appareil selon la revendication 1,
dans lequel les informations de signalisation comprennent un identifiant de flux de transport pour le premier dispositif.

3. Appareil selon la revendication 1,
dans lequel les informations de liaison comprennent en outre des informations de liaison étendue, les informations de liaison étendue comprennent au moins l'une parmi les informations de liaison pour SD et SUHD, les informations de liaison pour HD et SUHD ou les informations de liaison pour UHD et SUHD.

4. Procédé de réception d'un signal de diffusion, l'appareil comprenant:
la réception (S3301) d'un signal de diffusion comprenant un premier service basé sur un canal de diffusion notamment un canal par câble, un canal terrestre et un canal satellite, et un second service basé sur un canal de diffusion d'un canal Internet
l'analyse (S3302) d'informations de signalisation dans le signal de diffusion, dans lequel les informations de signalisation comprennent des informations de liaison, les informations de liaison comprennent les informations de type, dans lequel:
- une première valeur des informations de type représente un itinéraire pour découvrir une liste de services pour le second service pour le canal Internet dans le canal de diffusion, et
- une seconde valeur des informations de type représente un itinéraire pour découvrir une liste de services pour le second service pour le canal Internet dans le canal de diffusion; et
l'affichage (S3305) des informations de guide de service pour le premier service et le second service en fonction des informations de signalisation,
dans lequel les informations de signalisation sont transportées dans une table d'information sur le réseau, NIT, (90003) ou une table d'association de bouquets, BAT (90011) dans le signal de diffusion,
dans lequel les informations de liaison sont un descripteur de liaison d'indicateur de ressource uniforme, URI, comprenant un octet de données privées (90006, 90009), et
dans lequel l'octet de données privées comprend un ID de transport d'instance, ID, TSID, indiquant un TSID temporaire pour remplacer un TSID requis pour les données pour le canal Internet.

5. Procédé selon la revendication 4,
dans lequel les informations de signalisation comprennent un identifiant de flux de transport pour le premier dispositif.

6. Procédé selon la revendication 4,
dans lequel les informations de liaison comprennent en outre des informations de liaison étendue, les informations de liaison étendue comprennent au moins l'une parmi les informations de liaison pour SD et SUHD, les informations de liaison pour HD et SUHD ou les informations de liaison pour UHD et SUHD.

7. Procédé de transmission d'un signal de diffusion, le procédé comprenant:
la génération (S3202) d'un signal de diffusion comprenant un premier service,
la transmission (S3203) du signal de diffusion sur la base d'un canal de diffusion comprenant un canal par câble, un canal terrestre et un canal satellite;
la génération d'un second service; et
la transmission du second service sur la base d'un canal de diffusion d'un canal Internet,
dans lequel les informations de signalisation dans le signal de diffusion comprennent des informations de liaison, les informations de liaison comprennent les informations de type, dans lequel:
- une première valeur des informations de type représente un itinéraire pour découvrir une liste de services pour le second service pour le canal Internet dans le canal de diffusion, et
- une seconde valeur des informations de type représente un itinéraire pour découvrir une liste de services pour le second service pour le canal Internet dans le canal de diffusion,
dans lequel les informations de signalisation sont transportées dans une table d'information sur le réseau, NIT, (90003) ou une table d'association de bouquets, BAT (90011) dans le signal de diffusion,
dans lequel les informations de liaison sont un descripteur de liaison d'indicateur de ressource uniforme, URI, comprenant un octet de données privées (90006, 90009), et
dans lequel l'octet de données privées comprend un ID de transport d'instance, ID, TSID, indiquant un TSID temporaire pour remplacer un TSID requis pour les données pour le canal Internet.

8. Procédé selon la revendication 7,
dans lequel les informations de signalisation comprennent un identifiant de flux de transport pour le premier dispositif.

9. Procédé selon la revendication 7,
dans lequel les informations de liaison comprennent en outre des informations de liaison étendue, les informations de liaison étendue comprennent au moins l'une parmi les informations de liaison pour SD et SUHD, les informations de liaison pour HD et SUHD ou les informations de liaison pour UHD et SUHD.

10. Appareil destiné à transmettre un signal de diffusion, l'appareil comprenant:
un générateur configuré pour générer un signal de diffusion comprenant un premier service;
un émetteur configuré pour transmettre le signal de diffusion sur la base d'un canal de diffusion comprenant une canal par câble, un canal terrestre et un canal satellite;
le générateur étant en outre configuré pour générer un second service; et
l'émetteur étant en outre configuré pour transmettre le second service sur la base d'un canal de diffusion d'un canal Internet,
dans lequel les informations de signalisation dans le signal de diffusion comprennent des informations de liaison, les informations de liaison comprennent les informations de type, dans lequel:
- une première valeur des informations de type représente un itinéraire pour découvrir une liste de services pour le second service pour le canal Internet dans le canal de diffusion, et
- une seconde valeur des informations de type représente un itinéraire pour découvrir une liste de services pour le second service pour le canal Internet dans le canal de diffusion,
dans lequel les informations de signalisation sont transportées dans une table d'information sur le réseau, NIT, (90003) ou une table d'association de bouquets, BAT (90011) dans le signal de diffusion,
dans lequel les informations de liaison sont un descripteur de liaison d'indicateur de ressource uniforme, URI, comprenant un octet de données privées (90006, 90009), et
dans lequel l'octet de données privées comprend un ID de transport d'instance, ID, TSID, indiquant un TSID temporaire pour remplacer un TSID requis pour les données pour le canal Internet.

11. Appareil selon la revendication 10,
dans lequel les informations de signalisation comprennent un identifiant de flux de transport pour le premier dispositif.

12. Appareil selon la revendication 10,
dans lequel les informations de liaison comprennent en outre des informations de liaison étendue, les informations de liaison étendue comprennent au moins l'une parmi les informations de liaison pour SD et SUHD, les informations de liaison pour HD et SUHD ou les informations de liaison pour UHD et SUHD.
